# EUROPÄISCHE PATENTSCHRIFT

(11) **EP 3 663 146 B1**
(45) Veröffentlichungstag und Bekanntmachung des Hinweises auf die Patenterteilung: **28.09.2022**
(21) Anmeldenummer: 19210994.0
(22) Anmeldetag: 22.11.2019
(51) Int. Cl.: B60T 8/1755, B60W 30/095, B60W 40/09, B60W 50/14

(54) **FAHRASSISTENZSYSTEM FÜR EINEN KRAFTWAGEN, KRAFTWAGEN UND VERFAHREN ZUM BETREIBEN EINES KRAFTWAGENS**
DRIVING ASSISTANCE SYSTEM FOR A MOTOR VEHICLE, MOTOR VEHICLE AND METHOD FOR OPERATING A MOTOR VEHICLE
SYSTÈME D'AIDE À LA CONDUITE POUR VÉHICULE AUTOMOBILE, VÉHICULE AUTOMOBILE ET PROCÉDÉ DE FONCTIONNEMENT D'UN VÉHICULE AUTOMOBILE

(30) Priorität: 07.12.2018 DE 102018221241
(43) Veröffentlichungstag der Anmeldung: 10.06.2020
(73) Patentinhaber: Volkswagen AG, 38440 Wolfsburg (DE)
(72) Erfinder: Klingemann, Timo, 38524 Sassenburg (DE); Wonke, Michael, 38124 Braunschweig (DE); Schmidt, Bastian, 38440 Wolfsburg (DE); Fauck, Jörn, 38108 Braunschweig (DE); Wall, Maike, 38116 Braunschweig (DE)

(56) Entgegenhaltungen:
- EP-A1- 2 302 412
- EP-B1- 2 302 412
- DE-A1- 10 029 710
- DE-A1-102008 040 077
- DE-A1-102009 020 649
- DE-A1-102014 206 341
- DE-A1-102016 210 848
- KR-A- 20130 017 728
- US-A1- 2016 075 332

## Beschreibung

Die Erfindung betrifft ein Fahrassistenzsystem für einen Kraftwagen, einen entsprechenden Kraftwagen mit einem derartigen Fahrassistenzsystem und ein Verfahren zum Betreiben eines solchen Kraftwagens. Das Fahrassistenzsystem und das Verfahren dienen dabei zur Kollisionsvermeidung.

Trotz in den letzten Jahrzehnten erzielter Fortschritte in der Sicherheit von Kraftwagen und einer zunehmenden Verbreitung von Systemen und Funktionen zur Unterstützung von Fahrern beim Führen von Kraftwagen gibt es noch immer eine Vielzahl von zum Teil tödlichen Verkehrsunfällen. Um hier eine weitere Verbesserung zu erzielen, schlägt beispielsweise die DE 10 2013 225 970 A1 ein Verfahren vor, bei dem ein Fahrverhalten eines Fahrzeugs in Abhängigkeit von Umgebungsdaten beeinflusst wird. Es ist dabei vorgesehen, dass bei einer erkannten Kollisionsgefahr ein fahrerunabhängiger Bremseingriff mittels eines elektronisch geregelten Bremssystems des Fahrzeugs durchgeführt wird. Das Bremssystem ermöglicht dabei einen fahrerunabhängigen Aufbau von Bremskräften an den einzelnen Rädern des Fahrzeugs. Hierdurch soll letztlich eine Beherrschbarkeit und Fahrstabilität verbessert werden.

Die DE 101 28 792 A1 beschreibt ein Verfahren zur Vermeidung von Kollisionen eines Fahrzeugs mit Hindernissen. Aus Abstandswerten zwischen dem Fahrzeug und den Hindernissen wird dabei ein vorhandener Fahrraum berechnet und dieser mit einem ebenfalls berechneten benötigten Fahrraum verglichen. Bei Ausdehnung des benötigten Fahrraums über den vorhandenen Fahrraum hinaus werden Maßnahmen zur Kollisionsvermeidung eingeleitet.

Aus der DE 10 2009 034 386 A1 ist eine Fahrtunterstützungsvorrichtung für ein Fahrzeug bekannt. Dabei soll bestimmt werden, ob ein außerhalb des Fahrzeugs erfasstes Hindernis durch den Fahrer visuell erkennbar oder durch den Fahrer visuell nicht erkennbar ist. Weiter soll eine Fahrtunterstützung zum Vermeiden einer Kollision mit dem Hindernis gesetzt werden, wobei für ein durch den Fahrer visuell nicht erkennbares Hindernis eine Kollisionsgefahr höher bewertet wird als für ein durch den Fahrer visuell erkennbares Hindernis.

Die DE 100 29 710 A1 offenbart eine Fahrzeugfahrsicherheitseinrichtung zur Vermeidung einer Kollision zwischen einem Fahrzeug und einem entgegenkommenden Fahrzeug. Hierbei ist eine korrekte das entgegenkommende Fahrzeug passierende Route festlegbar, wobei durch ein Kollisionspositionsvorhersagemittel eine Kollisionsposition bestimmbar ist und durch ein Kollisionsvermeidungslenkdrehmomentberechnungsmittel das Fahrzeug auf die korrekte Route bewegbar ist.

Aufgabe der vorliegenden Erfindung ist es, eine Sicherheit im Straßenverkehr zu erhöhen. Diese Aufgabe wird erfindungsgemäß durch die Gegenstände der unabhängigen Patentansprüche gelöst. Vorteilhafte Ausgestaltungen und Weiterbildungen der vorliegenden Erfindung sind in den abhängigen Patentansprüchen, in der Beschreibung und in den Figuren angegeben.

Ein erfindungsgemäßes Fahrassistenzsystem für einen Kraftwagen dient, ist also eingerichtet zur Kollisionsvermeidung, also zum Unterstützen eines Fahrers des Kraftwagens oder eines Betriebs des Kraftwagens mit dem Ziel, eine Kollision des Kraftwagens zu vermeiden Dazu weist das Fahrassistenzsystem eine Datenverarbeitungseinrichtung mit einer Datenschnittstelle zum Empfangen von Fahrzustandsdaten des Kraftwagens und von einer Umgebungssensorik bereitgestellten Umgebungsdaten auf.

Die Fahrzustandsdaten charakterisieren oder beschreiben dabei einen Fahrzustand des Kraftwagens, beispielsweise dessen Geschwindigkeit, Fahrtrichtung, Lenkwinkel, Motorlast, Beladung, Ausstattung und/oder dergleichen mehr. Die Fahrzustandsdaten können durch das Fahrassistenzsystem, insbesondere die Datenverarbeitungseinrichtung, beispielsweise aus einem Bordnetz, etwa von weiteren Einrichtungen oder Systemen des Kraftwagens, abgerufen oder aus dort verfügbaren Daten ermittelt werden. Statische Teile dieser Daten oder Eigenschaften, welche insbesondere den Kraftwagen oder dessen Fahrverhalten charakterisieren oder angeben, können vorgegeben und beispielsweise in einer Speichereinrichtung des Fahrerassistenzsystems beziehungsweise der Datenverarbeitungseinrichtung hinterlegt sein.

Die Umgebungsdaten charakterisieren eine jeweils aktuelle Umgebung des Kraftwagens. Beispielsweise können die Umgebungsdaten Abstände zu einem oder mehreren Objekten oder Hindernissen in der Umgebung des Kraftwagens, einen Verlauf eines jeweils aktuell von dem Kraftwagen befahrenen Verkehrsweges, wenigstens ein Merkmal einer Straßenausstattung in der Umgebung des Kraftwagens, entsprechende Relativgeschwindigkeiten des Kraftwagens, Umgebungsbedingungen, wie etwa eine Art und/oder einen Zustand einer Fahrbahnoberfläche und/oder eine Wetterbedingung, und/oder dergleichen mehr angeben. Dazu kann die Umgebungssensorik beispielsweise eine Kamera, eine Radar-, Lidar-, Ultraschall- und/oder Laserscannereinrichtung und/oder dergleichen mehr sein oder umfassen. Die Umgebungssensorik kann dabei Teil des Fahrassistenzsystems oder Teil des Kraftwagens und dann, beispielsweise über das Bordnetz des Kraftwagens, mit dem Fahrassistenzsystem, insbesondere mit der Datenverarbeitungseinrichtung, verbunden sein. Die Datenschnittstelle kann eine übergeordnete Einheit oder Einrichtung sein, also beispielsweise mehrere Einzelschnittstellen umfassen.

Das erfindungsgemäße Fahrassistenzsystem ist dazu eingerichtet, anhand der Umgebungsdaten wenigstens ein fahrzeugexternes Hindernis, welches sich in der jeweils aktuellen Umgebung des Kraftwagens befindet, zu detektieren oder zu erkennen und in Abhängigkeit von den Fahrzustandsdaten eine entsprechende Kollisionsgefahr, also eine Gefahr oder Wahrscheinlichkeit für eine Kollision des Kraftwagens mit dem detektierten oder erkannten Hindernis, zu ermitteln. Dazu kann etwa eine Trajektorie des Kraftwagens und gegebenenfalls des Hindernisses bestimmt und fortgesetzt oder extrapoliert werden. Ebenso kann beispielsweise ein Modell des Kraftwagens vorgegeben sein und dessen Bewegung unter Berücksichtigung der Fahrzustandsdaten und gegebenenfalls der Umgebungsdaten simuliert oder modelliert werden. Insbesondere kann ein Fahrschlauch bestimmt werden, welcher mögliche zukünftige Positionen des Kraftwagens umfasst. Von einer Kollisionsgefahr kann dann ausgegangen werden, wenn sich das Hindernis in dem Fahrschlauch des Kraftwagens befindet oder gemäß einer Eigenbewegung des Hindernisses oder einer Relativbewegung zwischen dem Kraftwagen und dem Hindernis voraussichtlich in den Fahrschlauch gelangen wird.

In der vorliegenden Erfindung ist das Fahrassistenzsystem dazu eingerichtet, eine Wahrscheinlichkeit für ein erfolgreiches Ausweichen und eine Fahrstabilität des Kraftwagens während des Ausweichens zu optimieren und dazu in Abhängigkeit von fahrmechanischen Eigenschaften des Kraftwagens, einer Verkehrsdichte in der Umgebung, einer Relativgeschwindigkeit zwischen dem Kraftwagen und dem Hindernis und einer jeweiligen lokalen Bodenbeschaffenheit zu bestimmen, ob ein automatischer Bremseingriff auszuführen ist und ob der automatische Bremseingriff gegebenenfalls vor, während und/oder nach einem zum Führen des Kraftwagens entlang der Ausweichtrajektorie ausgeführten Lenkeingriff auszuführen ist. Die fahrmechanischen Eigenschaften des Kraftwagens, welche also etwa ein Fahrverhalten oder eine mögliche Veränderung der Bewegung oder des Fahrerzustands des Kraftwagens angeben oder bestimmen, können beispielsweise in einer Speichereinrichtung des Fahrassistenzsystems vorgegebenen hinterlegt sein. Es können hier also verschiedene Szenarien oder Abläufe analysiert oder simuliert und miteinander verglichen werden, um zu ermitteln, welches Szenario oder welcher Ablauf mit der größten Wahrscheinlichkeit ein erfolgreiches und kontrolliertes Ausweichen ermöglicht. Ebenso kann beispielsweise eine Zuordnung, etwa eine Tabelle oder ein Kennfeld oder dergleichen, vorgegeben sein, wodurch festgelegt oder vorgegeben ist, welches Szenario oder welcher Ablauf unter welchen Bedingungen auszuführen oder zu verfolgen ist.

Eine typische Situation, in welcher beispielsweise ein reiner Lenkeingriff ohne automatischen Bremseingriff auszuführen ist, kann beispielsweise eine innerstädtische Fahrt mit einer Relativgeschwindigkeit zwischen dem Kraftwagen und dem Fremdfahrzeug von ungefähr 28 m/s, entsprechend ungefähr 100 km/h, sein. In dieser Situation kann beispielsweise durch den Kraftwagen oder das Fremdfahrzeug eine jeweilige Fahrstreifen trennende Mittellinie überfahren werden, beispielsweise aufgrund einer Unaufmerksamkeit oder einer Blendung des Fahrers durch Gegenlicht oder dergleichen. Es wird dann eine Kollisionsgefahr mit einer oberhalb des ersten Schwellenwertes liegenden Kollisionswahrscheinlichkeit ermittelt, beispielsweise anhand von Parametern wie etwa der Relativgeschwindigkeit, lateralen Geschwindigkeitsvektoren, Gierraten, einer prädizierten Querüberdeckung zwischen dem Kraftwagen und dem Fremdfahrzeug, und/oder dergleichen mehr. Wird dann ermittelt, dass die Kollision ohne Eingriff des Fahrassistenzsystems nicht mehr verhindert werden kann und/oder der Kraftwagen voraussichtlich außer Kontrolle geraten wird, nimmt das Fahrassistenzsystem einen entsprechenden Eingriff, beispielsweise das Modifizieren des Steuereingriff des Fahrers und/oder einen zusätzlichen oder alternativen automatisierten Steuereingriff, vor, um den Kraftwagen entlang der bereits zuvor geplanten Ausweichtrajektorie zu führen beziehungsweise den Fahrer dabei zu unterstützen. Dabei können beispielsweise Parameter wie etwa ein gewünschter, also vorgegebener lateraler und/oder longitudinaler Sicherheitsabstand, eine benötigte Regelungs- oder Einstellzeit, Schwell- und/oder Latenzzeiten und/oder dergleichen mehr berücksichtigt werden. So kann beispielsweise ein zu schwaches Einlenken des Fahrers korrigiert werden, um ausreichend schnell die Querüberdeckung zu reduzieren oder aufzuheben, also den für die Kollisionsvermeidung notwendigen Querversatz aufzubauen. Umgekehrt kann ebenso ein Überlenken, also ein zu starkes Einlenken, und damit eine Destabilisierung des Kraftwagens verhindert oder korrigiert werden.

Die Planung der Ausweichtrajektorie oder mehrerer alternativer Ausweichtrajektorien erfolgt insbesondere bereits bei initialem Erkennen eines Vorhandenseins relevanter, also potentiell kollisionsgefährliches entgegenkommender Objekte oder Hindernisse. Dabei kann wenigstens ein Relevanzkriterium vorgegeben sein und ausgewertet oder überprüft werden, wie beispielsweise eine Unterschreitung eines vorgegebenen longitudinalen Mindestabstands oder dergleichen. Somit liegt dann also rechtzeitig mindestens eine valide Bahnkurve oder Ausweichtrajektorie vor, entlang welcher der Kraftwagen kollisionsvermeidend geführt werden kann, sofern die Kollision überhaupt vermeidbar ist.

Eine typische Situation, in welcher ein kombinierter Lenk- und Bremseingriff auszuführen ist, kann im außerstädtischen Betrieb liegen, beispielsweise bei einer Fahrt auf einer Landstraße mit üblichen Relativgeschwindigkeiten zwischen dem Kraftwagen und dem entgegenkommenden Fremdfahrzeug von ungefähr 56 m/s, entsprechend ungefähr 200 km/h. Hier kann zu einem Zeitpunkt, zu dem das Fremdfahrzeug als potenziell kollisionsgefährliches Hindernis erkannt oder ermittelt wird, ein vorgelagerter automatisierter Bremseingriff erfolgen mit dem Vorteil, dass besonders frühzeitig kinetische Energie abgebaut wird und dadurch gleichzeitig ein für ein Ausweichmanöver mindestens benötigter Ausweichabstand, also eine longitudinale Distanz zwischen dem Kraftwagen und dem Fremdfahrzeug in Fahrtrichtung des Kraftwagens, reduziert wird. Hierdurch steht dann vorteilhaft auch mehr Zeit zum Bestimmen der Ausweichtrajektorie zur Verfügung. Dazu werden etwa Verzögerungs- und Lateralvektoren in Abhängigkeit von Parametern wie etwa der aktuellen Geschwindigkeit, der gegebenen und/oder prädizierten Querüberdeckung, einer erreichbaren Querbeschleunigung, des longitudinalen Abstands und/oder dergleichen mehr geplant und optimiert. Es ist hier dann also eine zweistufige Systemauslösung vorgesehen, wobei als erste Stufe der automatische vorgelagerte Bremseingriff oder Bremsvorgang mit einer relativ kurzzeitigen, relativ hohen Verzögerung erfolgt und zeitlich hieran anschließend oder danach als zweite Stufe der Ausweichvorgang oder das Ausweichmanöver erfolgt oder durchgeführt, der Kraftwagen also entlang der Ausweichtrajektorie an dem Fremdfahrzeug vorbeigeführt wird. Bei dem kombinierten Lenk-Bremsvorgang können der automatische Bremseingriff und der Lenkeingriff zumindest teilweise gleichzeitig, also zeitlich überlappend, erfolgen oder beispielsweise zeitlich unmittelbar aneinander anschließen.

In einer dritten Situation kann beispielsweise ermittelt werden, dass höchstens eine Teilreduzierung der Querüberdeckung erreichbar ist, wobei daraus resultierende Kollisions- oder Unfallfolgen nicht sicher prädizierbar sind. In einer solchen Situation, in der also ein vollständiges Ausweichen nicht sichergestellt ist oder sichergestellt werden kann, kann ein automatischer Bremseingriff, insbesondere eine Notbremsung, ausgeführt und auf den Lenkeingriff verzichtet oder ein Lenkeingriff verhindert werden.

Für die genannte Zuordnung können also beispielsweise Geschwindigkeitsschwellenwerte für die Relativgeschwindigkeit zwischen dem Kraftwagen und dem Hindernis vorgegeben sein, um besonders schnell und eindeutig eine Auswahl eines jeweiligen Szenarios oder Vorgangs zu ermöglichen. Die Geschwindigkeitsschwellenwerte können dabei dynamisch angepasst werden, beispielsweise in Abhängigkeit von den genannten Parametern und/oder beispielsweise in Abhängigkeit von Umwelt- oder Umgebungsdaten, beispielsweise einer Glätte des befahrenen Untergrundes und/oder einem Vorhandensein von Bodenunebenheiten, wie beispielsweise einer Bordsteinkante oder dergleichen. Beispielsweise kann ein Überfahren einer Bordsteinkante im Rahmen des Ausweichmanövers abhängig von der Geschwindigkeit des Kraftwagens zu einem Kontrollverlust, also zur Destabilisierung des Kraftwagens führen oder nicht. Diese Parameter oder Gegebenheiten können ebenso für die Bestimmung oder Planung der Ausweichtrajektorie und/oder für das Optimieren der Wahrscheinlichkeit für das erfolgreiche Ausweichen und die Fahrstabilität berücksichtigt werden. Hierbei können ebenso weitere Parameter oder Gegebenheiten, wie beispielsweise eine Aktivität oder ein Verhalten des Fahrers, berücksichtigt werden, was weiter unten noch näher erläutert wird.

Das Fahrassistenzsystem ist weiter dazu eingerichtet, wenigstens eine Ausweichtrajektorie für den Kraftwagen zur Vermeidung einer Kollision des Kraftwagens mit dem Hindernis zu bestimmen. Die Ausweichtrajektorie gibt also einen möglichen Pfad an, welchem der Kraftwagen folgen kann und welcher voraussichtlich kollisionsfrei an dem Hindernis vorbeiführt. Die Ausweichtrajektorie kann also eine innerhalb des Fahrschlauches liegende Linie sein. Zum Bestimmen der Ausweichtrajektorie können insbesondere die Fahrzustandsdaten und gegebenenfalls die Umgebungsdaten berücksichtigt werden. Beispielsweise sind mögliche Ausweichtrajektorien, also solche Fahrtrajektorien, die der Kraftwagen in einer jeweiligen Situation tatsächlich befahren oder verfolgen kann, durch die Eigenschaften und Möglichkeiten des Kraftwagens begrenzt. So kann - gegebenenfalls geschwindigkeitsabhängig - beispielsweise ein Lenkwinkel des Kraftwagens nicht oder nicht beliebig schnell und nicht auf beliebige Werte eingestellt und die Geschwindigkeit des Kraftwagens nicht beliebig schnell geändert werden. Dies ist nicht nur von dem aktuellen Zustand und einer Ausstattung des Kraftwagens, sondern gegebenenfalls auch von den Umgebungsbedingungen, beispielsweise einem Fahrbahnbelag, abhängig. Durch Berücksichtigen entsprechender Daten, hier also beispielsweise der Fahrzustandsdaten und/oder der Umgebungsdaten, können der Fahrschlauch und die Ausweichtrajektorie vorteilhaft besonders genau und besonders zuverlässig bestimmt werden.

Erfindungsgemäß ist das Fahrassistenzsystem dazu eingerichtet, als das Hindernis ein dem Kraftwagen entgegenkommendes Fremdfahrzeug zu detektieren, für welches die Kollisionsgefahr größer als ein vorgegebener erster Schwellenwert ist. Dazu kann die Kollisionsgefahr beispielsweise als Wahrscheinlichkeit bestimmt werden. Die vorliegende Erfindung zielt also insbesondere auf eine Vermeidung von Frontalkollisionen ab. Aufgrund der dabei typischerweise auftretenden hohen Relativgeschwindigkeiten kann bei deren Vermeidung durch das erfindungsgemäße Fahrassistenzsystem besonders effektiv eine Verbesserung der Sicherheit erreicht werden. Weiter ist das Fahrassistenzsystem erfindungsgemäß dazu eingerichtet, zu überprüfen, ob ein Steuereingriff eines Fahrers des Kraftwagens diesen entlang der bestimmten Ausweichtrajektorie führt oder voraussichtlich führen wird und, wenn dies nicht der Fall ist, den Steuereingriff des Fahrers automatisch zu modifizieren, sodass der Kraftwagen durch den modifizierten Steuereingriff entlang der bestimmten Ausweichtrajektorie geführt wird oder auf der Ausweichtrajektorie gehalten wird.

Ein Steuereingriff im Sinne der vorliegenden Erfindung ist dabei ein, beispielsweise durch eine entsprechende Bedienhandlung, einen Bedienbefehl oder einen Steuerbefehl veranlasster oder bewirkter, Eingriff, welcher eine Bewegung des Kraftwagens beeinflusst. Insbesondere kann der Steuereingriff also ein Lenkeingriff, das heißt eine Veränderung eines Lenkeinschlags oder Lenkwinkels, sein. Zum Modifizieren des Steuereingriffs kann das Fahrassistenzsystem beispielsweise einen Wert oder eine Größe eines entsprechenden Steuersignals oder Steuerbefehls variieren oder ein zusätzliches Steuersignal oder einen zusätzlichen Steuerbefehl erzeugen oder überlagern. In heutigen Kraftwagen ist oftmals eine Verbindung oder Verknüpfung zwischen einem Bedienelement und einer letztlich darüber angesteuerten oder beeinflussten Einrichtung des Kraftwagens, beispielsweise zwischen einem Lenkrad oder einem Pedal einerseits und den Rädern, dem Motor und/oder einer Bremsanlage des Kraftwagens andererseits, nicht ausschließlich rein mechanisch. Vielmehr kann diese Verbindung oder Verknüpfung zumindest Teilstrecken umfassen, über welche hinweg lediglich Datensignale und keine direkte mechanische Kraft übertragen wird (englisch: steer-by-wire). Zusätzlich oder alternativ können beispielsweise elektrische, elektromotorische, elektromechanische oder elektrohydraulische Einrichtungen in die Verbindung oder Verknüpfung integriert sein oder an dieser angreifen. Beispiele hierfür sind etwa eine Servolenkung, ein Motorsteuergerät, ein Bremskraftverstärker, eine Antischlupfregelung und/oder dergleichen mehr. Insbesondere über diese Teilstrecken oder Einrichtungen bietet sich somit die Möglichkeit, den Steuereingriff des Fahrers oder dessen tatsächlich eintretende Wirkung auf eine Bewegung oder einen Fahrzustand des Kraftwagens zu modifizieren. Dies ist für den Fahrer dabei transparent, wird also von dem Fahrer nicht notwendigerweise oder ohne Weiteres wahrgenommen.

Beispielsweise kann durch das Fahrassistenzsystem ein Lenkmoment oder ein Lenkwinkel, eine Beschleunigung oder Bremskraft oder Bremskraftverteilung oder dergleichen modifiziert, angepasst oder eingestellt werden. Das Fahrassistenzsystem oder eine entsprechende Modifikationseinrichtung des Fahrassistenzsystems kann also beispielsweise in die Verbindung oder Verknüpfung, also eine funktionale Wirkungskette zwischen dem wenigstens einem Bedienelement und einer die letztliche Bewegung oder den letztlichen Fahrzustand des Kraftwagens umsetzenden Einrichtung des Kraftwagens geschaltet sein. Das Fahrassistenzsystem beziehungsweise die Modifikationseinrichtung kann dann beispielsweise den Steuereingriff oder Steuerbefehl empfangen, modifizieren und dann modifiziert entlang der Verbindung, Verknüpfung oder Wirkungskette weiterleiten. Ebenso kann das Fahrassistenzsystem beziehungsweise die Modifikationseinrichtung beispielsweise den Steuereingriff überwachen und für das Modifizieren die jeweilige Einrichtung des Kraftwagens, beispielsweise also ein Lenksystem, die Servolenkung, den Motor oder ein Motorsteuergerät, eine Bremsanlage oder den Bremskraftverstärker oder dergleichen, durch einen zusätzlichen Steuerbefehl ansteuern, sodass sich effektiv eine Modifikation des Steuereingriffs des Fahrers ergibt. Es kann gerade in einer Stresssituation, wie bei einer möglicherweise bevorstehenden Kollision, beispielsweise vorkommen, dass der Fahrer zu schwach oder zu stark oder zu schnell oder zu langsam einlenkt oder beispielsweise während des Einlenkens eine tatsächliche Veränderung einer Ausrichtung oder Fahrtrichtung des Kraftwagens nicht durch zusätzliche Maßnahmen, wie beispielsweise einen Lastwechsel, ein Bremsen der Beschleunigen, unterstützt. Dies kann dann etwa darin resultieren, dass die rein physikalisch betrachtet vermeidbare Kollision nicht vermieden wird oder der Kraftwagen während eines Ausweichens oder Ausweichmanövers außer Kontrolle gerät. Entsprechende Ungenauigkeiten werden durch das vorliegende Fahrassistenzsystem durch Modifizieren des Steuereingriffs ausgeglichen oder aufgefangen. Die bestimmte Ausweichtrajektorie kann dabei beispielsweise als hinsichtlich der Kollisionsvermeidung und einer Fahrstabilität oder Fahrzeugstabilität optimierte Ideallinie aufgefasst werden.

Besonders vorteilhaft ist dabei, dass der Fahrer eine grundsätzliche Kontrolle über den Kraftwagen behalten kann und gleichzeitig der Kraftwagen sicher und zuverlässig geführt oder bewegt wird. Da somit also der Fahrer nicht notwendigerweise gänzlich von der Kontrolle oder Steuerung des Kraftwagens ausgeschlossen wird, kann vorteilhaft eine verbesserte Sicherheit trotz der noch nicht vollständig ausgereiften Technik für ein vollautonomes oder vollautomatisiertes Führen des Kraftwagens und trotz entsprechender rechtlicher Beschränkungen verbessert und dabei zudem gleichzeitig eine Akzeptanz für unterstützende oder teilautomatisierte Fahrassistenzsysteme verbessert werden, was ebenfalls der Sicherheit im Verkehrsgeschehen zugutekommt.

Das vorliegend vorgeschlagene Fahrassistenzsystem ermöglicht vorteilhaft eine Reaktion auf entgegenkommende Fremdfahrzeuge unabhängig davon, ob diese sich regelwidrig auf einem von dem Kraftwagen befahrenen Fahrstreifen aufhalten oder bewegen oder der Kraftwagen regelwidrig einen für eine Gegenrichtung vorgesehenen Fahrstreifen befährt oder sich der Kraftwagen und das Fremdfahrzeug im Freifeld, also in einem Bereich ohne Fahrbahn- oder Fahrstreifenmarkierungen, bewegen.

Besonders bevorzugt an das Fahrassistenzsystem dazu eingerichtet sein, auf ein Erkennen der Kollisionsgefahr hin zum weiteren Verbessern der Sicherheit und zum weiteren Unterstützen des Fahrers wenigstens ein passives Sicherheitssystem des Kraftwagens auszulösen, zu aktivieren oder in einen Zustand erhöhter Bereitschaft, welcher eine schnellere Aktivierung oder Wirkungsentfaltung gegenüber einem in ungefährlichen Verkehrssituationen vorgesehenen Standardzustand ermöglicht, zu versetzen. Dies kann beispielsweise einen Gurtstraffer betreffen, sodass ein Sicherheitsgurt bereits vor dem Ausweichen automatisch gestrafft werden kann. Ebenso kann beispielsweise prädiktiv ein Druck in einer Bremsanlage des Kraftwagens aufgebaut oder erhöht oder beispielsweise ein Abstand zwischen einer Bremsscheibe und einem Bremsbelag verringert werden kann.

In vorteilhafter Ausgestaltung der vorliegenden Erfindung ist das Fahrassistenzsystem dazu eingerichtet - sofern vorhanden - mehrere Hindernisse in der Umgebung zu detektieren und deren Bewegung oder Bewegungen relativ zu dem Kraftwagen nachzuverfolgen. Weiter ist das Fahrassistenzsystem dann dazu eingerichtet, für solche dieser Hindernisse, für die eine von null verschiedene Kollisionswahrscheinlichkeit bestimmt wurde, eine jeweilige Ausweichtrajektorie auch dann zu bestimmen und kontinuierlich zu aktualisieren, wenn die jeweilige Kollisionswahrscheinlichkeit kleiner als der vorgegebene erste Schwellenwert ist. Mit anderen Worten ist das Fahrassistenzsystem also dazu eingerichtet, für potentiell kollisionsgefährliche Hindernisse in der Umgebung des Kraftfahrzeugs prädiktiv deren relative Trajektorienvektoren oder Bahnkurven in Bezug auf den Kraftwagen vorherzusagen und mögliche Reaktionen zu bestimmen. Da dies vorliegend bereits vorgesehen ist, also erfolgt, bevor die Kollisionswahrscheinlichkeit den ersten Schwellenwert erreicht oder überschreitet, steht üblicherweise ausreichend Zeit zur Verfügung, um eine besonders genaue Prädiktion durchzuführen und eine besonders zuverlässige und sichere Ausweichtrajektorie, gegebenenfalls für unterschiedliche Szenarien oder Entwicklungen, zu bestimmen. Auf diese Weise kann vorteilhaft sichergestellt werden, dass für jedes kollisionsgefährliche Hindernis bereits eine berechnete oder bestimmte Ausweichtrajektorie zur Verfügung steht, sobald die jeweilige Kollisionswahrscheinlichkeit den ersten Schwellenwert erreicht oder überschreitet. Dies ermöglicht dann eine schnellere Reaktion des Fahrassistenzsystems, wodurch eine weiter verbesserte Sicherheit erreicht werden kann. Es ist hier also vorgesehen, dass durch das Fahrassistenzsystem kein die Bewegung oder den Fahrzustand des Kraftwagens beeinflussender Steuereingriff vorgenommen oder modifiziert wird, solange der erste Schwellenwert nicht durch wenigstens eine Kollisionswahrscheinlichkeit für wenigstens eines der detektierten Hindernisse erreicht oder überschritten wird beziehungsweise überschritten ist.

In weiterer vorteilhafter Ausgestaltung der vorliegenden Erfindung ist das Fahrassistenzsystem dazu eingerichtet, automatisch zu bestimmen, ob durch einen Steuereingriff, insbesondere also den Steuereingriff des Fahrers, den modifizierten Steuereingriff oder einen vollständig automatisierten, also durch das Fahrassistenzsystem bewirkten, Steuereingriff, eine zur Kollisionsvermeidung oder für eine Minderung einer Kollisionsauswirkung für den Fahrer ausreichende Verkleinerung einer Querüberdeckung oder Querüberlappung zwischen dem Kraftwagen und dem Hindernis erreichbar ist. Das Fahrassistenzsystem ist dann weiter dazu eingerichtet, sofern dies nicht der Fall ist, die ausreichende Verkleinerung der Querüberdeckung also nicht erreichbar ist, Steuereingriffe, insbesondere Lenkeingriffe, welche zu einer nicht ausreichenden Verkleinerung der Querüberdeckung führen würden, zu unterdrücken oder zu verhindern. Eine Verkleinerung der Querüberdeckung entspricht dabei einer Vergrößerung eines Quer- oder Lateralversatzes zwischen dem Kraftwagen und dem Hindernis. Dabei kann eine aktuelle Dynamik der jeweiligen Situation, also die Geschwindigkeit, die Bewegungsrichtung, der Fahr- oder Betriebszustand des Kraftwagens, eine Relativbewegung zwischen dem Kraftwagen und dem Hindernis, ebenso wie die Umgebungsdaten, also etwa eine Fahrbahnbeschaffenheit, und/oder gegebenenfalls über eine kabellose Datenverbindung empfangene Zusatzdaten berücksichtigt werden. Solche Zusatzdaten können beispielsweise von einer fahrzeugexternen Einrichtung, wie etwa einem Verkehrsleitsystem übermittelte Verkehrsdaten und/oder beispielsweise über eine Car-2-Car-Datenverbindung von dem als das Hindernis detektierten Fremdfahrzeug übermittelte Bewegungsdaten sein, welche eine geplante Bewegung oder Reaktion des Fremdfahrzeugs angeben.

Es kann mit anderen Worten also ermittelt werden, ob im besten Fall oder realistisch, das heißt beispielsweise mit wenigstens einer vorgegebenen Mindestwahrscheinlichkeit, die ausreichende Verkleinerung der Querüberdeckung erreicht werden kann. Wird hingegen ermittelt, dass auch im besten Fall oder mit entsprechend hoher Wahrscheinlichkeit die Querüberdeckung, also eine Überdeckung oder Überlappung zwischen dem Kraftwagen und dem Fremdfahrzeug in jeweiliger Fahrzeugquerrichtung, nicht vollständig aufgehoben werden kann, kann durch das Fahrassistenzsystem verhindert werden, dass es zu der Kollision mit lediglich reduzierter Querüberdeckung, also mit nicht für die Kollisionsvermeidung ausreichendem Querversatz, kommt. Beispielsweise kann zum Zeitpunkt, zu dem die ermittelte Kollisionswahrscheinlichkeit den vorgegebenen ersten Schwellenwert erreicht oder überschreitet die Querüberdeckung, 70 % betragen. Wird dann ermittelt, dass unter Berücksichtigung der physikalischen Gegebenheiten oder Randbedingungen in der jeweiligen Situation die Querüberdeckung nur auf beispielsweise 15 % reduziert werden kann, können entsprechende, dies bewirkende Maßnahmen, Steuerbefehle oder Steuereingriffe oder deren Ausführung verhindert oder unterdrückt werden. In einem solchen Fall kann also die Kollision nicht mehr verhindert werden, wobei aber eine Kollision mit größerer Querüberdeckung weniger schwere und besser vorhersagbare Folgen oder Auswirkungen für den Fahrer und gegebenenfalls weitere Fahrzeuginsassen des Kraftwagens und des Fremdfahrzeugs haben kann. Beispielsweise kann eine resultierende Rotation des Kraftwagens um einen Kollisions- oder Aufprallpunkt vermieden oder gegenüber einer Kollision mit geringerer Querüberdeckung reduziert werden. Dadurch kann vorteilhaft gegebenenfalls verhindert werden kann, dass der Kraftwagen in den Gegenverkehr oder beispielsweise einen neben der Straße befindlichen Abhang hinunter geschleudert wird. Zudem kann bei größerer Querüberdeckung mehr Aufprallenergie durch dafür vorgesehene Bauteile, also eine jeweilige Knautschzone, des Kraftwagens und des Fremdfahrzeugs absorbiert werden. Dadurch kann eine Wahrscheinlichkeit dafür erhöht werden, dass eine Fahrgastzelle des Kraftwagens und des Fremdfahrzeugs jeweils intakt bleibt, wodurch eine Wahrscheinlichkeit für schwere Verletzungen des jeweiligen Fahrers signifikant reduziert werden kann.

In weiterer vorteilhafter Ausgestaltung der vorliegenden Erfindung ist das Fahrassistenzsystem dazu eingerichtet, das Führen des Kraftwagens entlang der Ausweichtrajektorie durch automatisches Einstellen einer Drehmomentverteilung (englisch: Active Yaw, Torque Vectoring) und/oder durch Ansteuern eines aktiven Fahrwerks des Kraftwagens zum Einstellen einer individuellen Radlast zu unterstützen. Durch diese Maßnahmen kann das Führen des Kraftwagens entlang der Ausweichtrajektorie effektiv und dabei gleichzeitig für den Fahrer besonders transparent, also unmerklich, unterstützt oder sichergestellt werden. Der Fahrer behält also vorteilhaft die grundsätzliche Kontrolle über den Kraftwagen, bestimmt also beispielsweise eine Richtung eines Lenkeinschlags selbst.

Die Drehmomentverteilung und die individuelle Radlast sind dabei Größen oder Parameter, welche üblicherweise nicht direkt durch den Fahrer gesteuert werden können, sodass sich durch deren automatisches oder automatisierte Einstellen besonders effektiv und effizient ein zusätzlicher Sicherheitsgewinn erzielen lässt, insbesondere ohne dem Fahrer bisher gewohnte Kontrolle über den Kraftwagen zu entziehen. Letzteres kann vorteilhaft zu einer verbesserten Akzeptanz und somit Verbreitung des erfindungsgemäßen Fahrassistenzsystems beitragen.

In weiterer vorteilhafter Ausgestaltung der vorliegenden Erfindung ist das Fahrassistenzsystem dazu eingerichtet, bei Erkennen der Kollisionsgefahr eine Warnkaskade auszulösen. Die Warenkaskade umfasst dabei zeitlich aufeinanderfolgend ein optisches Warnsignal, ein akustisches Warnsignal, ein haptisches Warnsignal und schließlich das Modifizieren des Steuereingriffs des Fahrers und/oder einen Steuereingriff des Fahrassistenzsystems. Die Warnkaskade kann dabei bereits ausgelöst werden, wenn die Kollisionsgefahr oder Kollisionswahrscheinlichkeit einen vorgegebenen zweiten Schwellenwert erreicht oder überschreitet, welcher niedriger als der vorgegebene erste Schwellenwert ist. Mit anderen Worten kann die Warnkaskade also beispielsweise bereits ausgelöst werden, bevor das Vermeiden der Kollision ohne Steuereingriff des Fahrassistenzsystems unvermeidbar ist. Dadurch, dass zunächst die Warnsignale oder Warnungen an den Fahrer ausgegeben werden, kann dieser vorteilhaft besonders frühzeitig auf die Kollisionsgefahr aufmerksam gemacht werden und mit größerer Wahrscheinlichkeit den Kraftwagen sicher und kontrolliert an dem jeweiligen Hindernis vorbeiführen. Insbesondere kann so eine Ablenkung oder ein Erschrecken des Fahrers durch einen automatischen Steuereingriff vermieden oder reduziert werden. Dadurch können vorteilhaft Schreckreaktionen des Fahrers vermieden werden, welche die Bewegung oder den Fahrzustand des Fahrzeugs in unkontrollierter und unerwünschter Weise beeinflussen und damit ein erfolgreiches Ausweichen erschweren können. Besonders vorteilhaft kann es vorgesehen sein, dass die Warnkaskade abgebrochen wird, sobald der Fahrer auf eines der Warnsignale mit einem Steuereingriff reagiert und ermittelt wird, dass der Kraftwagen durch diesen Steuereingriff an dem Hindernis vorbeigeführt wird, insbesondere wenn ermittelt wird, dass durch den Steuereingriff die Kollisionswahrscheinlichkeit sinkt. Insbesondere kann die Warnkaskade abgebrochen, also auf einen automatischen Steuereingriff oder das Modifizieren des Steuereingriff des Fahrers verzichtet werden, wenn aufgrund des Steuereingriff des Fahrers die Kollisionswahrscheinlichkeit den vorgegebenen ersten Schwellenwert nicht erreicht oder unter diese oder unter den zweiten Schwellenwert absinkt bevor zur Kollisionsvermeidung ein automatischer Steuereingriff durch das Fahrassistenzsystem notwendig ist. Hierdurch kann vorteilhaft die Kontrolle über den Kraftwagen so weit wie möglich bei dem Fahrer belassen werden, wodurch dieser nicht nur weniger abgelenkt oder irritiert wird, sondern auch die Akzeptanz und damit Verbreitung des Fahrassistenzsystems weiter verbessert werden kann.

in weiterer vorteilhafter Ausgestaltung der vorliegenden Erfindung ist das Fahrassistenzsystem dazu eingerichtet, zu überwachen, ob der Fahrer den Steuereingriff vornimmt und wenn dies bei ermittelter Kollisionsgefahr nicht der Fall ist, durch einen automatischen Steuereingriff den Kraftwagen automatisiert entlang der Ausweichtrajektorie zu führen. In dieser Ausgestaltung der vorliegenden Erfindung ist das Fahrassistenzsystem also zum autonomen oder automatisierten Führen oder Betreiben des Kraftwagens eingerichtet, zumindest zur oder im Rahmen der Kollisionsvermeidung. Durch die hier vorgesehene in Abhängigkeit von der Reaktion oder dem Verhalten des Fahrers angepasste oder abgestufte Reaktion des Fahrassistenzsystems kann vorteilhaft in besonders vielen Situationen die Kollisionsvermeidung zuverlässig erreicht werden, wobei vorteilhaft gleichzeitig die Kontrolle über den Kraftwagen so weit wie möglich bei dem Fahrer belassen wird. Beispielsweise kann die Kollisionsgefahr entstehen, wenn oder weil der Fahrer eingeschlafen ist oder beispielsweise aufgrund eines medizinischen Notfalls den Kraftwagen nicht mehr manuell steuern kann. In einem solchen Fall ist es dem Fahrer gegebenenfalls nicht möglich, den oder einen Steuereingriff manuell auszuführen, um die Kollision zu vermeiden. Dementsprechend wäre dann also eine Modifikation eines Steuereingriffs durch das Assistenzsystem gegebenenfalls nicht möglich. Diese Problematik wird vorliegend durch den fahrerunabhängigen automatischen Steuereingriff umgangen.

In vorteilhafter Weiterbildung der vorliegenden Erfindung umfasst das Fahrassistenzsystem eine Fahrerbeobachtungseinrichtung. Dies kann beispielsweise eine in einem Innenraum des Kraftwagens angeordnete und auf den Fahrer oder einen Fahrersitz des Kraftwagens ausgerichtete Kamera sein oder umfassen. Ebenso kann die Fahrerbeobachtungseinrichtung zusätzlich oder alternativ eine Sensorik umfassen, welche Bedieneingaben oder Bedienhandlungen des Fahrers detektiert. Das Fahrassistenzsystem ist in dieser Ausgestaltung der vorliegenden Erfindung dazu eingerichtet, den automatischen Steuereingriff vorzunehmen, wenn nach dem Ermitteln der Kollisionsgefahr ein Reaktionszeitfenster verstrichen ist, ohne dass der Fahrer selbst den Steuereingriff zur Kollisionsvermeidung begonnen hat. Weiter ist das Fahrassistenzsystem dazu eingerichtet, eine zeitliche Länge des Reaktionszeitfensters in Abhängigkeit von durch die Fahrerbeobachtungseinrichtung bereitgestellten Fahrerreaktionsdaten, welche ein Verhalten und/oder einen Fahrstil des Fahrers charakterisieren, automatisch anzupassen. Mit anderen Worten kann also eine Reaktionszeit des Fahrers abgewartet werden, bevor der automatische Steuereingriff ausgeführt wird. Hierdurch wird dem Fahrer also Gelegenheit gegeben, auf die Kollisionsgefahr beziehungsweise das Hindernis zu reagieren und den Kraftwagen selbstständig an dem Hindernis vorbeizusteuern.

Die von unterschiedlichen Fahrern oder von dem Fahrer in unterschiedlichen Situationen tatsächlich benötigte Reaktionszeit kann jedoch variieren. Ist beispielsweise bekannt, dass der Fahrer üblicherweise eine relativ kurze Reaktionszeit hat und in der Vergangenheit durch seinen Fahrstil überdurchschnittliche Fähigkeiten zum Führen des Kraftwagens demonstriert hat, kann die Länge des Reaktionszeitfensters vergrößert werden, der automatische Steuereingriff also zu einem späteren Zeitpunkt durchgeführt werden, da eine größere Wahrscheinlichkeit dafür besteht, dass der Fahrer auch bei einem relativ späten manuellen Eingreifen den Kraftwagen sicher und zuverlässig an dem Hindernis vorbeiführen kann. Wird jedoch beispielsweise ermittelt, dass der Fahrer in seinem aktuellen Zustand und/oder gemäß seinen in der Vergangenheit durch seinen Fahrstil oder seine Verhaltensweisen demonstrierten Fähigkeiten zum Führen des Kraftwagens ohnehin nicht mehr rechtzeitig, sicher und zielgerichtet reagieren kann, kann der automatische Steuereingriff vorverlegt, die Länge des Reaktionszeitfensters also verringert werden. Dadurch, dass der automatische Steuereingriff dann also früher erfolgen kann, kann dieser weniger stark ausfallen, wodurch eine Wahrscheinlichkeit für eine Destabilisierung des Kraftwagens, also ein Außer-Kontrollegeraten des Kraftwagens, verringert werden und/oder die Wahrscheinlichkeit für das Vermeiden der Kollision verbessert werden kann. Es muss also dann nicht bis zu einem für die Kollisionsvermeidung spätestmöglichen Zeitpunkt gewartet werden, bevor der automatische Steuereingriff ausgeführt wird. Insgesamt wird so eine besonders flexible und situationsangepasste Reaktion des Fahrassistenzsystems ermöglicht, wodurch das Fahrassistenzsystem und dessen Verhalten also optimal auf den individuellen Fahrer, dessen Eigenschaften und/oder Zustand abgestimmt werden kann, um einen optimalen Kompromiss zwischen einer Kontrollübernahme über den Kraftwagen durch das Fahrassistenzsystem, also einen Entzug von Kontrolle von dem Fahrer, einerseits und einem durch die Stärke des automatischen Steuereingriff bestimmten Komfort andererseits erreicht werden kann.

Ein weiterer Aspekt der vorliegenden Erfindung ist ein Kraftwagen, welcher eine Umgebungssensorik zum Erfassen von Umgebungsdaten, welche eine jeweils aktuelle Umgebung des Kraftwagens charakterisieren, und ein damit verbundenes erfindungsgemäßes Fahrassistenzsystem aufweist. Der erfindungsgemäße Kraftwagen kann also insbesondere der im Zusammenhang mit dem erfindungsgemäßen Fahrassistenzsystem genannte Kraftwagen sein. Dementsprechend kann der erfindungsgemäße Kraftwagen einige oder alle der im Zusammenhang mit dem erfindungsgemäßen Fahrassistenzsystem genannten Eigenschaften und Bauteile aufweisen. Dies kann beispielsweise Einrichtungen wie die Servolenkung oder die Bremsanlage ebenso wie die genannten Bedienelemente und die genannte Sensorik und/oder dergleichen mehr betreffen.

Ein weiterer Aspekt der vorliegenden Erfindung ist ein Verfahren zum Betreiben eines erfindungsgemäßen Kraftwagens. Bei dem Verfahren wird durch das Fahrassistenzsystem anhand der Umgebungsdaten automatisch wenigstens ein Hindernis detektiert und eine Kollisionsgefahr für eine Kollision des Kraftwagens mit dem Hindernis ermittelt. Weiter wird durch das Fahrassistenzsystem automatisch wenigstens eine Ausweichtrajektorie für den Kraftwagen zur Vermeidung der Kollision bestimmt. Erfindungsgemäß wird durch das Fahrassistenzsystem bei dem Verfahren als das Hindernis ein dem Kraftwagen entgegenkommendes Fremdfahrzeug, für welches die Kollisionsgefahr größer als ein vorgegebener erster Schwellenwert ist, detektiert. Weiter wird erfindungsgemäß durch das Fahrassistenzsystem bei dem Verfahren überprüft, ob ein Steuereingriff des Fahrers des Kraftwagens diesen entlang der bestimmten Ausweichtrajektorie führt oder voraussichtlich führen wird, und, wenn dies nicht der Fall ist, der Steuereingriff des Fahrers automatisch modifiziert, sodass der Kraftwagen durch den modifizierten Steuereingriff entlang der bestimmten Ausweichtrajektorie geführt wird. Erfindungsgemäß wird bei dem Verfahren eine Wahrscheinlichkeit für ein erfolgreiches Ausweichen und eine Fahrstabilität des Kraftwagens während des Ausweichens optimiert. Dazu wird in Abhängigkeit von fahrmechanischen Eigenschaften des Kraftwagens, einer Verkehrsdichte in der Umgebung, einer Relativgeschwindigkeit zwischen dem Kraftwagen und dem Hindernis und einer jeweiligen lokalen Bodenbeschaffenheit bestimmt, ob ein automatischer Bremseingriff auszuführen ist und ob der automatische Bremseingriff vor, während und/oder nach einem zum Führen des Kraftwagens entlang der Ausweichtrajektorie ausgeführten Lenkeingriffs auszuführen ist. Mit anderen Worten sind also das erfindungsgemäße Fahrassistenzsystem und der erfindungsgemäße Kraftwagen zum Ausführen oder Durchführen des erfindungsgemäßen Verfahrens eingerichtet. Dabei können im Zusammenhang mit dem erfindungsgemäßen Fahrassistenzsystem und/oder im Zusammenhang mit dem erfindungsgemäßen kraftwagenbeschriebene Vorgänge, Maßnahmen oder Abläufe als weitere, gegebenenfalls optionale, Verfahrensschritte des erfindungsgemäßen Verfahrens vorgesehen sein.

Um das erfindungsgemäße Verfahren, also die beschriebenen Maßnahmen, Vorgänge oder Abläufe durchführen oder ausführen zu können, können das erfindungsgemäße Fahrassistenzsystem und der erfindungsgemäße Kraftwagen jeweils eine entsprechende Datenverarbeitungseinrichtung aufweisen. Diese Datenverarbeitungseinrichtung kann insbesondere ein computerlesbares Speichermedium umfassen, auf welchem ein Programmcode oder Computerprogramm oder Computerprogrammprodukt gespeichert ist, welches die Verfahrensschritte des Verfahrens repräsentiert oder kodiert. Weiter kann die Datenverarbeitungseinrichtung eine mit dem computerlesbaren Speichermedium verbundene Prozessoreinrichtung, beispielsweise einen Mikroprozessor oder einen Mikrocontroller, aufweisen. Die Prozessoreinrichtung ist dabei ausgebildet und angeordnet zum Ausführen des auf dem computerlesbaren Speichermedium gespeicherten Programmcode oder Computerprogramms, wodurch die Verfahrensschritte des entsprechenden Verfahrens oder deren zumindest teilautomatische Durchführung bewirkt wird. Das Computerprogramm oder der Programmcode ist also dazu ausgebildet, bei seiner Ausführung durch die Prozessoreinrichtung die Durchführung des erfindungsgemäßen Verfahrens zu bewirken, also das Fahrassistenzsystem beziehungsweise den Kraftwagen zur Ausführung des Verfahrens zu veranlassen.

Das genannte Computerprogrammprodukt und das genannte computerlesbares Speichermedium bilden ihrerseits jeweils einen weiteren Aspekt der vorliegenden Erfindung.

Im Folgenden sind Ausführungsbeispiele der Erfindung beschrieben. Hierzu zeigt:
- Fig. 1: eine schematische Draufsicht auf eine Verkehrsszene mit einem Kraftwagen mit einem Fahrassistenzsystem zur Kollisionsvermeidung und einem kollisionsgefährlichen Fremdfahrzeug; und
- Fig. 2: einen beispielhaften schematischen Ablaufplan für ein Verfahren zum Betreiben des Kraftwagens aus Fig.1 oder dessen Fahrassistenzsystems.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

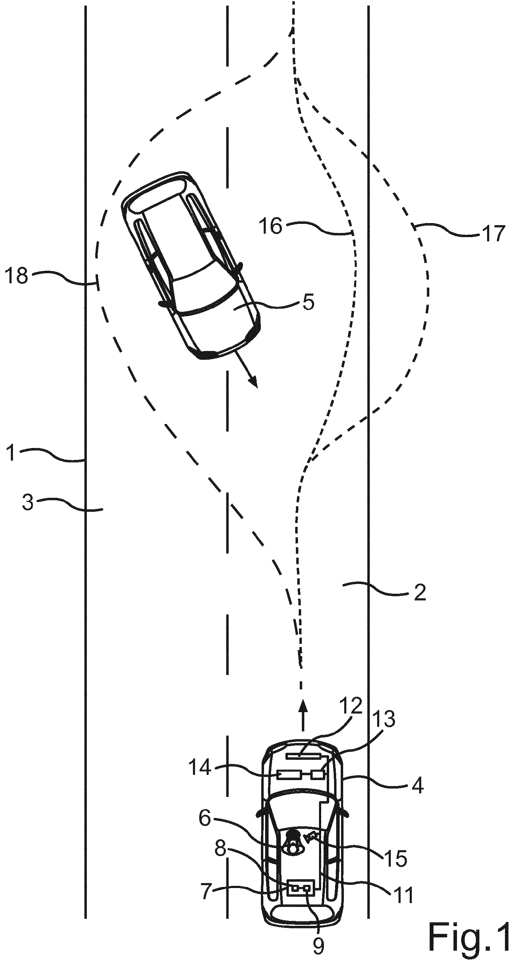

Fig. 1 zeigt eine schematische Draufsicht auf eine Verkehrsszene mit einer Straße 1, welche zwei Fahrstreifen aufweist, die hier als rechter Fahrstreifen 2 und als linker Fahrstreifen 3 bezeichnet werden. Auf dem rechten Fahrstreifen 2 bewegt sich vorliegend ein Kraftwagen 4. Dem Kraftwagen 4 entgegenkommend ist ein Fremdfahrzeug 5 dargestellt, welches vorliegend den linken Fahrstreifen 3 teilweise verlassen hat und sich in Richtung des rechten Fahrstreifens 2 und des Kraftwagens 4 bewegt. Fahrtrichtungen des Kraftwagens 4 und des Fremdfahrzeugs 5 sind hier durch entsprechende Pfeile angedeutet.

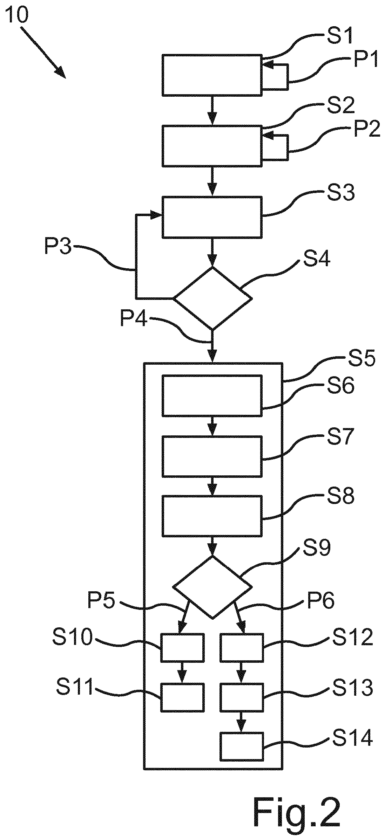

Der Kraftwagen 4, der von einem Fahrer 6 gesteuert wird, weist ein Fahrassistenzsystem 7 auf, welches ausgebildet und eingerichtet ist zur Kollisionsvermeidung, also zur Vermeidung von Kollisionen des Kraftwagens 4 und/oder zum Unterstützen des Fahrers 6 beim Führen des Kraftwagens 4 zur Kollisionsvermeidung. Dazu weist das Fahrassistenzsystem 7 ein computerlesbares Speichermedium 8 mit einem Computerprogramm, beispielsweise einem Betriebsprogramm für das Fahrassistenzsystem 7, sowie eine damit verbundene Prozessoreinrichtung 9 zum Ausführen dieses Computerprogramms auf. Eine schematische Übersicht über Funktionen oder Programmmodule oder -blöcke dieses Computerprogramms ist in Fig. 2 als beispielhafter schematischer Ablaufplan 10 illustriert, der weiter unten näher erläutert wird. Um seine Aufgabe zu erfüllen, verarbeitet das Fahrassistenzsystem 7 Daten, welche es über ein Bordnetz 11 des Kraftwagens empfängt. An dieses Bordnetz 11 angeschlossen sind vorliegend beispielhaft eine Umgebungssensorik 12 zum Erfassen einer Umgebung oder entsprechender, die Umgebung des Kraftwagens 4 charakterisierender Umgebungsdaten. Diese Umgebung umfasst vorliegend beispielsweise den hier dargestellten Abschnitt der Straße 1 einschließlich eines Verlaufs der Fahrstreifen 2, 3 und das Fremdfahrzeug 5 sowie einen Seitenbereich, welcher sich neben der Straße 1, insbesondere neben dem rechten Fahrstreifen 2, erstreckt.

Weiter ist an das Bordnetz 11 eine Steuereinrichtung 13 zum Steuern oder Kontrollieren eines Antriebssystems 14 des Kraftwagens 4 angeschlossen. Die Steuereinrichtung 13 und das Antriebssystem 14 können hier repräsentativ für mehrere Einrichtungen oder Funktionseinheiten aufgefasst werden. So kann das Antriebssystem 14 beispielsweise einen Antriebsmotor, ein Getriebe, eine Lenkeinrichtung, ein aktives Fahrwerk, eine Dämpfungseinrichtung, eine Bremsanlage, entsprechende Verbindungen und Aktuatoren und dergleichen mehr umfassen oder repräsentieren. Dementsprechend kann die Steuereinrichtung 13 entsprechende Steuergeräte, Sensoren, Aktuatoren und/oder dergleichen mehr umfassen oder repräsentieren. Die Steuereinrichtung 13 kann dem Fahrassistenzsystem 7 beispielsweise entsprechende Betriebs- oder Fahrzustandsdaten, welche eine aktuelle Situation des Kraftwagens 4 charakterisieren, übermitteln. Weiter ist an das Bordnetz 11 als Fahrerbeobachtungseinrichtung eine auf den Fahrer 6 ausgerichtete Kamera 15 angeschlossen. Die Kamera 15 kann Bilddaten des Fahrers 6 an das Fahrassistenzsystem 7 übermitteln, aus welchen das Fahrassistenzsystem 7 durch eine Bildverarbeitung eine Reaktion oder ein Verhalten des Fahrers 6 ermitteln kann.

Auf die in Fig. 1 dargestellte Situation folgend kann es zu einer Kollision zwischen dem Kraftwagen 4 und dem Fremdfahrzeug 5 kommen, wenn sich beide unverändert auf ihrem derzeitigen Kurs weiter fortbewegen würden. Eine solche Kollision entspräche hier einer Frontalkollision zwischen dem Kraftwagen 4 und dem diesem entgegenkommenden Fremdfahrzeug 5. Derartige Frontalkollisionen können besonders schwere Folgen nach sich ziehen, da eine Relativgeschwindigkeit zwischen dem Kraftwagen 4 und dem Fremdfahrzeug 5 besonders hoch ist, beispielsweise im Gegensatz zu einem typischen Auffahrunfall zwischen zwei Fahrzeugen, die sich in die gleiche Richtung bewegen. Es ist daher vorliegend ein Ziel, derartige Frontkollisionen zu vermeiden oder eine Kollisions- oder Unfallschwere bei Frontalkollisionen mit entgegenkommenden Objekten durch einen Ausweichvorgang und/oder eine Bremsung zu reduzieren.

Dazu ist vorliegend das Fahrassistenzsystem 7 vorgesehen. Das Fahrassistenzsystem 7 ist also ein System oder repräsentiert eine Funktion oder Funktionalität, womit Frontalkollisionen, also Gegenverkehrsunfälle, typischerweise zweier Kraftwagen, durch einen aktiven Lenk- und/oder Bremsvorgang vermieden oder abgeschwächt werden können. Grundsätzlich ist hier eine Anwendung für einspurige Fahrzeuge ebenso wie für mehrspurige Fahrzeuge möglich.

In einem Verfahrensschritt S1 werden beispielsweise der Kraftwagen 4 und das Fahrassistenzsystem 7 in Betrieb genommen. Daraufhin wird dann während eines Betriebs des Kraftwagens 4 und des Fahrassistenzsystems 7mittels der Umgebungssensorik 12 und der Kamera 15 kontinuierlich eine Erfassung oder Überwachung der Umgebung und des Fahrers 6 durchgeführt sowie ein Kurs, also eine Trajektorie oder eine Bewegung des Kraftwagens 4 für einen sich vom jeweils aktuellen Zeitpunkt in die Zukunft erstreckenden Prädiktionszeitraum prädiziert. Die kontinuierliche Durchführung dieser Maßnahmen oder Vorgänge ist hier durch einen schleifenförmigen Programmpfad P1 angedeutet. Vorliegend erfasst die Umgebungssensorik 12 insbesondere das Fremdfahrzeug 5.

In einem Verfahrensschritt S2 werden die im Verfahrensschritt S1 aufgenommenen Daten durch das Fahrassistenzsystem 7 verarbeitet. Dabei wird vorliegend das Fremdfahrzeug 5 als dem Kraftwagen 4 entgegenkommendes Hindernis erkannt und klassifiziert. Dabei kann insbesondere ein Kurs oder eine Trajektorie des Fremdfahrzeugs bestimmt und berücksichtigt werden. Das Fahrassistenzsystem 7 ist dadurch vorteilhaft nicht auf Fahrbahn- oder Fahrstreifenmarkierungen angewiesen, um das Fremdfahrzeug 5 als kollisionsgefährliches Hindernis zu detektieren oder zu erkennen. Das bedeutet auch, dass es beispielsweise unerheblich ist, welcher Verkehrsteilnehmer jeweils für die Kollisionsgefahr beziehungsweise die gegebenenfalls bevorstehende Frontalkollision verantwortlich ist.

Das Detektieren und Nachverfolgen von Hindernissen ebenso wie das Prädizieren, also das Vorhersagen, von deren Kurs oder Trajektorie, insbesondere relativ zu dem Kraftwagen 4, kann während eines Betriebs des Kraftwagens 4 und des Fahrassistenzsystems 7 ebenfalls kontinuierlich oder wiederholt durchgeführt werden, was hier durch einen schleifenförmigen Programmpfad P2 angedeutet ist.

Sobald ein Hindernis, vorliegend also das Fremdfahrzeug 5, in der Umgebung des Kraftwagens 4 erkannt worden ist, kann in einem Verfahrensschritt S3 eine Kollisionswahrscheinlichkeit, also eine Wahrscheinlichkeit für eine Kollision zwischen dem Kraftwagen 4 und dem jeweiligen Hindernis, durch das Fahrassistenzsystem 7 bestimmt werden. Ebenso können hier zu jedem der Hindernisse oder beispielsweise zu solchen der detektierten Hindernisse, für die eine oberhalb eines Wahrscheinlichkeitsschwellenwertes liegende Kollisionswahrscheinlichkeit bestimmt wurde, jeweils eine oder mehrere Ausweichtrajektorien bestimmt werden, denen der Kraftwagen 4 zur Vermeidung der Kollision mit dem jeweiligen Hindernis folgen könnte. Das Bestimmen oder Berechnen der möglichen Ausweichtrajektorien kann mit heutzutage verfügbarer Hardware, beispielsweise einem geeigneten dedizierten Mikroprozessor, dessen Datenschnittstellen sowohl sensorisch als auch aktorisch eine benötigte Architektur, also beispielsweise das Fahrassistenzsystem 7, das Bordnetz 11 und/oder die Steuereinrichtung 13, eingebettet sind, in Echtzeit durchgeführt werden. Für eine Berechnung oder Planung von Trajektorien oder Bahnkurven für Kraftfahrzeuge gibt es bereits bekannte Lösungsansätze.

In einem Verfahrensschritt S4 wird kontinuierlich überprüft, ob eine der bestimmten Kollisionswahrscheinlichkeiten einen vorgegebenen zweiten Schwellenwert erreicht oder überschreitet. Dieses kontinuierliche Bestimmen und Überprüfen der Kollisionswahrscheinlichkeiten ist hier durch einen schleifenförmigen Programmpfad P3 angedeutet.

Sobald eine Kollision beispielsweise unter Berücksichtigung von Parametern wie der Relativgeschwindigkeit, einem Lateralversatz, einer Gierrate, einem Objektabstand in Längsrichtung zwischen dem Kraftwagen 4 und dem jeweiligen Hindernis und/oder dergleichen mehr als wahrscheinlich eingestuft wird, also den zweiten Schwellenwert erreicht oder überschreitet, folgt das Verfahren einem Programmpfad P4 und es wird in einem Verfahrensschritt S5 eine Warnkaskade ausgelöst. Die Warenkaskade repräsentiert eine mehrstufige Auslösung oder einen mehrstufigen Eingriff des Fahrassistenzsystems 7 mit dem Ziel, die Kollision zu vermeiden oder abzuschwächen.

Als Teil der Warnkaskade ist vorliegend in einem Verfahrensschritt S5 eine optische Warnung an den Fahrer 6 vorgesehen. Reagiert der Fahrer 6 hierauf nicht oder nicht effektiv genug, um die Kollision voraussichtlich zu vermeiden, wird in einem Verfahrensschritt S7 eine akustische Warnung an den Fahrer 6 ausgegeben, um diesen auf die weiterhin bestehende Kollisionsgefahr hinzuweisen oder aufmerksam zu machen. Erfolgt auch hierauf keine oder keine ausreichende Reaktion des Fahrers 6, wird in einem Verfahrensschritt S8 eine haptische Warnung erzeugt, also an den Fahrer 6 ausgegeben. Diese haptische Warnung kann beispielsweise ein Vibrieren eines Lenkrads und/oder eines Pedals des Kraftwagens oder dergleichen sein oder umfassen.

In einem Verfahrensschritt S9 kann wenigstens eine weitere Bedingung überprüft werden. Beispielsweise kann überprüft werden, ob die Kollisionswahrscheinlichkeit einen vorgegebenen ersten Schwellenwert, welcher höher ist als der genannte zweite Schwellenwert, erreicht oder überschritten hat und damit insbesondere die Kollision als unvermeidlich angenommen werden muss, sofern kein Steuereingriff erfolgt, um die Bewegung oder Trajektorie des Kraftwagens 4 zu verändern. Ebenso kann beispielsweise überprüft werden, ob beispielsweise seit der optischen, akustischen und/oder haptischen Warnung ein vorgegebenes Reaktionszeitfenster verstrichen ist. Ebenso kann überprüft werden, wie viel Zeit noch bis zu einem kritischen Zeitpunkt verbleibt, zu dem spätestens der Steuereingriff erfolgen muss, um die Kollision zu vermeiden. Diese verbleibende Zeit oder Zeitdauer kann verglichen werden mit einer für den Fahrer 6 ermittelten oder vorgegebenen Reaktionszeit. Diese Reaktionszeit ebenso wie das Reaktionszeitfenster können beispielsweise basierend auf einer nachverfolgten Historie eines Fahrverhaltens oder Fahrstils und/oder basierend auf einem aktuellen Zustand des Fahrers 6 durch das Fahrassistenzsystem während dessen Betriebs dynamisch angepasst werden. Der Zustand des Fahrers 6 kann beispielsweise durch das Fahrassistenzsystem 7 basierend auf den von der Kamera 15 gelieferten Bilddaten ermittelt werden. Beispielsweise kann aus einer Augen- oder Liedbewegung auf eine Wachheit oder eine Aufmerksamkeit des Fahrers geschlossen werden.

In Abhängigkeit von Gegebenheiten der jeweiligen Situation, beispielsweise der Geschwindigkeit des Kraftwagens 4, der Relativgeschwindigkeit zwischen dem Kraftwagen 4 und dem Fremdfahrzeug 5, einem bekannten oder beispielsweise aufgrund einer erkannten Wetterbedingung angenommenen lokalen Reibwert der Straße 1 und/oder weiterer Parameter kann ein Szenario oder Ablauf für einen Steuereingriff des Fahrassistenzsystems 7 bestimmt oder ausgewählt werden.

Wenn der Fahrer 6 rechtzeitig, also insbesondere vor dem genannten kritischen Zeitpunkt, reagiert, kann das Verfahren einem Programmpfad P5 folgen. Gemäß dem bestimmten oder ausgewählten Szenario oder Ablauf kann gegebenenfalls in einem Verfahrensschritt S10 durch das Fahrassistenzsystem 7 ein automatischer Bremseingriff bewirkt werden. Dazu kann beispielsweise ein entsprechender Steuerbefehl von dem Fahrassistenzsystem 7 über das Bordnetz 11 an die Steuereinrichtung 13 übermittelt werden, welche den Befehl dann umsetzt, beispielsweise eine Bremsanlage des Kraftwagens 4 entsprechend ansteuert.

Der Steuer- oder Systemeingriff durch das Fahrassistenzsystem 7 ist beispielsweise geschwindigkeitsabhängig in unterschiedlichen Ausprägungen möglich. In einer ersten Ausprägung sei die Relativgeschwindigkeit zwischen den Kraftwagen 4 und dem Fremdfahrzeug 5 relativ niedrig, beispielsweise niedriger als ein vorgegebener erster Geschwindigkeitsschwellenwert. In der Regel ist dann davon auszugehen, dass ein zunächst unaufmerksamer, aber geübter und reaktionsschneller Fahrer 6 in der Lage ist, nach der Warnung oder den Warnungen durch das Fahrassistenzsystem 7 selbstständig einen Ausgleichvorgang einzuleiten, durch welchen die Kollision vermieden wird. Beispielsweise in Abhängigkeit von der Art des durch den Fahrer 6 veranlassten Ausweichvorgangs, beispielsweise einer Richtung eines Lenkradeinschlags, abhängig von einer räumlichen und kinetischen oder dynamischen Entwicklung der jeweiligen Situation und/oder weiteren Parametern kann das Fahrassistenzsystem eine der beispielsweise bereits im Verfahrensschritt S3 bestimmten und seitdem kontinuierlich aktualisierten Ausweichtrajektorien als tatsächlich zu verfolgende Ausweichtrajektorie bestimmen. In Fig. 1 sind schematisch eine erste Ausweichtrajektorie 16, eine zweite Ausweichtrajektorie 17 und eine dritte Ausweichtrajektorie 18 angedeutet. Alle diese Ausweichtrajektorien 16, 17, 18 Stellen voraussichtlich einen ausreichenden Querversatz zwischen dem Kraftwagen 4 und dem Fremdfahrzeug 5 sicher, um die Kollision zu vermeiden, führen den Kraftwagen 4 an dem Fremdfahrzeug 5 vorbei und anschließend wieder auf den rechten Fahrstreifen 2 zurück. Lenkt der Fahrer 6 beispielsweise nach rechts ein, kann vorteilhaft eine der Ausweichtrajektorien 16, 17 ausgewählt werden, um den Lenkeinschlag des Fahrers nicht vollständig umkehren zu müssen, was für Verwirrung und unvorhersehbare Reaktionen sorgen könnte. Ob die erste Ausweichtrajektorie 16 oder die zweite Ausweichtrajektorie 17 ausgewählt wird, kann beispielsweise von lokalen Gegebenheiten neben dem rechten Fahrstreifen 2, einer maximal erreichbaren Querbeschleunigung oder Richtungsveränderung und/oder dergleichen mehr abhängig sein.

Der Ausweichvorgang, also ein Ausweichmanöver angesichts des entgegenkommenden Fremdfahrzeugs 5, kann für den Fahrer 6 eine Stresssituation sein, in der er erfahrungsgemäß nicht immer ruhig, präzise und zielgerichtet exakt reagieren kann. Um die tatsächliche Bewegung des Kraftwagens 4 hinsichtlich der Kollisionsvermeidung und der Fahrstabilität zu optimieren, wird in einem Verfahrensschritt S11 der manuelle Steuereingriff des Fahrers 6 durch das Fahrassistenzsystem 7 modifiziert, um den Kraftwagen 4 entlang der ausgewählten Ausweichtrajektorie 16, 17, 18 zu führen. Dazu können entsprechende Modifikationen oder Steuerbefehle durch das Fahrassistenzsystem 7 über das Bordnetz 11 an die Steuereinrichtung 13 gesendet werden. Um also beispielsweise den notwendigen Lateralversatz zur Kollisionsvermeidung herzustellen und gleichzeitig ein Übersteuern des Kraftwagens 4 zu verhindern, kann der durch den Fahrer 6 eingeleitete Ausweichvorgang durch das Fahrassistenzsystem 7 beispielsweise durch Aufbringen eines zusätzlichen Lenkmoments oder eines Gegenlenkmoments, durch Vergrößern oder Verkleinern eines Lenkwinkels, durch eine Einzelradbremsung, durch eine Hinterachslenkung, durch Einstellen einer Drehmomentverteilung oder eines aktiven Fahrwerks, durch Einstellen einer Radlast und/oder dergleichen mehr unterstützt werden. Der Ausweichvorgang oder Steuereingriff des Fahrers 7 wird also durch das Fahrassistenzsystem 7 optimiert.

Der zur Kollisionsvermeidung notwendige Quer- oder Lateralversatz zwischen dem Kraftwagen 4 und dem Fremdfahrzeug 5 kann vorzugsweise durch einen Lenkeingriff hergestellt und beispielsweise durch eine radselektive Bremsung unterstützt werden. Da die radselektive Bremsung durch den Fahrer 6 nicht direkt beeinflusst werden kann, kann es vorgesehen sein, dass sie für den Fall, dass der Fahrer 6 der vorgegebenen oder ausgewählten Ausweichtrajektorie 16, 17, 18 nicht folgt und überlenkt, also die durch das Fahrassistenzsystem 7 eingebrachte Modifizierung oder Unterstützung übersteuert, deaktiviert werden. Entsprechendes kann für die Unterstützung beispielsweise durch Hinterachslenkung, Torque-Vectoring, Radlastveränderung mithilfe des aktiven Fahrwerks und dergleichen mehr gelten.

Dadurch kann einerseits einem durch den manuellen Steuereingriff deutlich gemachten Wunsch des Fahrers 6 entsprochen oder gefolgt und andererseits der Kraftwagen 4 sicher, zuverlässig und stabil entlang der jeweils situationsabhängig als ideal oder optimal ermittelten kollisionsfreien Ausweichtrajektorie 16, 17, 18 geführt werden. Es kann dabei vorteilhaft vorgesehen sein, dass der Fahrer 6, beispielsweise durch Aufbringen eines ausreichend hohen Lenkmoment, die ausgewählte Ausweichtrajektorie 16, 17, 18 verlassen kann. Hierdurch kann dem Umstand Rechnung getragen werden, dass der Fahrer 16 gegebenenfalls über mehr oder andere Informationen verfügen kann als das Fahrassistenzsystem 7.

Je nach bestimmtem oder ausgewählten Szenario oder Ablauf können vor, während und/oder nach dem oder den durch den Fahrer 6 vorgenommenen Steuereingriffen durch das Fahrassistenzsystem 7 ein oder mehrere automatische Bremseingriffe ausgeführt werden. Der Ausweichvorgang oder der Steuereingriff des Fahrers 6 kann also in Kombination mit einer Bremsung unterstützt werden, beispielsweise sofern der Ausweichvorgang, also ein Lenkeingriff alleine, die Kollision nicht verhindern kann. Dabei bestehen vielfältige Kombinationsmöglichkeiten, die situationsabhängig ausgewählt werden können. Eine erste solche Kombination, also ein erstes Szenario oder eine erste Ablauf, kann beispielsweise ein - relativ kurzes und starkes - Anbremsen, gefolgt von einem Lösen der Bremse, gefolgt von dem Lenkeingriff zum Ausweichen umfassen. Eine zweite Kombination kann beispielsweise ein - relativ kurzes und starkes - Anbremsen, gefolgt von einem Lösen der Bremse, gefolgt von einem Lenkeingriff zum Ausweichen, gefolgt von einem erneuten Bremsen umfassen. Weitere Kombinationen können beispielsweise ein Bremsen und ein anschließendes oder zeitlich überlappendes Ausweichen oder ein Ausweichen gefolgt von einem Bremsen sein oder umfassen.

Der Ausweichvorgang kann vorzugsweise beispielsweise ein Weglenken von dem Kollisionsobjekt, eine Stabilisierung des Kraftwagens 4 und eine Sicherstellung einer zur ursprünglichen Trajektorie des Kraftwagens 4 parallelen oder kollinearen Weiterfahrt, gegebenenfalls mit Nullversatz in Querrichtung, umfassen.

Zeigt der Fahrer 6 keine Reaktion, führt also keinen Steuereingriff zur Kollisionsvermeidung durch, so kann das Verfahren stattdessen einem Programmpfad P6 folgen. Auch hier kann in einem situationsabhängigen, also gegebenenfalls optionalen, Verfahrensschritt S12 zunächst eine automatische Bremsung durchgeführt werden. Ebenso wie im Verfahrensschritt S10 kann hier S12 situationsabhängig die Kollisionsvermeidung mit durch einen additiven Bremseingriff des Fahrassistenzsystems 7 vor, während und/oder nach dem Ausweichen beziehungsweise dem Lenkeingriff unterstützt oder optimiert werden. Denkbare Szenarien hierfür sind vielfältig und beispielsweise von Eigenschaften des Kraftwagens 4, wie etwa Masse, Schwerpunkt, Radstand und dergleichen, der Verkehrsdichte, lokale Gegebenheiten, wie etwa Fahrbahnbreite, Fahrbahnbeschaffenheit, Reibwert und dergleichen, situativen Besonderheiten, wie etwa Geschwindigkeiten, Überdeckung und dergleichen, abhängig. Als relevante Reaktionsoptionen existieren etwa alleiniges Ausweichen, Bremsen mit anschließendem Ausweichen, Bremsen mit gleichzeitigem Ausweichen, Bremsen gefolgt von Ausweichen gefolgt von Bremsen, Ausweichen mit anschließendem Bremsen. Eine Entscheidung über die jeweils beste, also im Sinne einer fahrdynamisch sicheren und auch für ein Umfeld sicheren zu verwendenden oder einzusetzenden, Kollisionsvermeidung kann anhand der hier genannten Parameter und/oder weiterer Parameter automatisch durch das Fahrassistenzsystem 7 getroffen werden.

In einem anschließenden oder zeitlich überlappenden Verfahrensschritt S13 kann das Fahrassistenzsystem 7 dann einen automatischen Steuereingriff vornehmen, um den Kraftwagen 4 autonom entlang der ausgewählten Ausweichtrajektorie 16, 17, 18 zu führen. Ein solches automatisches Ausweichen kann beispielsweise durchgeführt werden, sofern der Fahrer 6 bei einer applizierbaren Kollisionszeitlücke keine kollisionsvermeidenden Eingriffe, also beispielsweise kein Bremsen und/oder Lenken, vornimmt. Zur Quantifizierung der Kollisionszeitlücke kann wie beschrieben die Kamera 15 und/oder eine Schätzung einer Aktivität oder eines Verhaltens des Fahrers 6, beispielsweise basierend auf dessen charakteristischer Fahrweise, vorgesehen sein. Auch der automatische Ausweichvorgang kann wie beschrieben mit einem oder mehreren Bremsvorgängen kombiniert werden.

Der automatische oder autonome Steuereingriff durch das Fahrassistenzsystem 7 kann eine zweite Ausprägung des Systemeingriffs durch das Fahrassistenzsystem 7 darstellen. Beispielsweise bei höheren Relativgeschwindigkeiten der beteiligten Fahrzeuge ist gegebenenfalls davon auszugehen, dass insbesondere ein zunächst unaufmerksamer Fahrer nicht mehr kollisionsverhindernd rechtzeitig eingreifen kann. Eine Systemhandlungszeit, also ein Zeitfenster für eine Einleitung eine Reaktion, also des Steuereingriffs, kann beispielsweise bei typischen Landstraßen- oder Autobahngeschwindigkeiten weniger als 1 Sekunde betragen. Die in den Verfahrensschritten S6 bis S8 gegebenenfalls an den Fahrer 6 ausgegebenen Warnungen können dann unmittelbar vor dem automatischen Steuereingriff durch das Fahrassistenzsystem 7 erfolgen und dann primär einer Alarmierung des Fahrers 6 dienen, um diesen darauf aufmerksam zu machen, dass ein automatischer System- oder Steuereingriff erfolgen wird. Der Ausweichvorgang erfolgt dann also automatisch, das heißt der Fahrer 6 muss nicht notwendigerweise aktiv einen Steuereingriff, also beispielweise eine Lenkbewegung, ausführen. Grundsätzlich müssen sich hier die Hände des Fahrers 6 beispielsweise nicht an dem Lenkrad des Kraftwagens 4 befinden. Das hier vorgeschlagene Fahrassistenzsystem 7 eignet sich somit auch für einen pilotierten Betrieb des Kraftwagens 4.

Insbesondere für den Fall, dass der Fahrer 6 vor oder während des Ausweisvorgangs keine Reaktion gezeigt hat, kann in einem Verfahrensschritt S14 nachdem der Kraftwagen 4 das Fremdfahrzeug 5 passiert hat der Kraftwagen 4 automatisch zum Stillstand gebracht werden. In einem solchen Fall ist davon auszugehen, dass besondere Umstände vorliegen, welche gegen eine reguläre Fortführung der aktuellen Fahrt des Kraftwagens 4 sprechen können.

Insgesamt zeigen die beschriebenen Beispiele, wie durch das Fahrassistenzsystem 7 zur aktiven Vermeidung von Frontalkollisionen durch Unterstützung des Fahrers 6 beim Führen des Kraftwagens 4, also durch ein System zur Vermeidung von Gegenverkehrsunfällen, eine Sicherheit im Straßenverkehr erhöht werden kann.

### Bezugszeichenliste

- 1: Straße
- 2: rechter Fahrstreifen
- 3: linker Fahrstreifen
- 4: Kraftwagen
- 5: Fremdfahrzeug
- 6: Fahrer
- 7: Fahrassistenzsystem
- 8: Speichermedium
- 9: Prozessoreinrichtung
- 10: Ablaufplan
- 11: Bordnetz
- 12: Umgebungssensorik
- 13: Steuereinrichtung
- 14: Antriebssystem
- 15: Kamera
- 16: erste Ausweichtrajektorie
- 17: zweite Ausweichtrajektorie
- 18: dritte Ausweichtrajektorie
- S1-S13: Verfahrensschritte
- P1-P5: Programmpfade

## Patentansprüche

1. Fahrassistenzsystem (7) für einen Kraftwagen (4) zur Kollisionsvermeidung, aufweisend eine Datenverarbeitungseinrichtung (9) mit einer Datenschnittstelle zum Empfangen von Fahrzustandsdaten des Kraftwagens (4) und von einer Umgebungssensorik bereitgestellten Umgebungsdaten, welche eine jeweils aktuelle Umgebung des Kraftwagens (4) charakterisieren, wobei das Fahrassistenzsystem (7) dazu eingerichtet ist,
- anhand der Umgebungsdaten ein fahrzeugexternes Hindernis (5) zu detektieren und in Abhängigkeit von den Fahrzustandsdaten eine entsprechende Kollisionsgefahr zu ermitteln,
- eine Ausweichtrajektorie (16, 17, 18) zur Vermeidung einer Kollision des Kraftwagens (4) mit dem Hindernis (5) zu bestimmen,- als das Hindernis (5) ein dem Kraftwagen (4) entgegenkommendes Fremdfahr- zeug (5) zu detektieren, für welches die Kollisionsgefahr größer als ein vorgege- bener erster Schwellenwert ist, und
- zu überprüfen, ob ein Steuereingriff eines Fahrers (6) des Kraftwagens (4) diesen entlang der bestimmten Ausweichtrajektorie (16, 17, 18) führt, und wenn dies nicht der Fall ist, den Steuereingriff des Fahrers (6) automatisch zu modifizieren, sodass der Kraftwagen (4) durch den modifizierten Steuereingriff entlang der bestimmten Ausweichtrajektorie (16, 17, 18) geführt wird,
**dadurch gekennzeichnet, dass**
das Fahrassistenzsystem (7) dazu eingerichtet ist, eine Wahrscheinlichkeit für ein erfolgreiches Ausweichen und eine Fahrstabilität des Kraftwagens (4) während des Ausweichens zu optimieren und dazu in Abhängigkeit von fahrmechanischen Eigenschaften des Kraftwagens (4), einer Verkehrsdichte in der Umgebung, einer Relativgeschwindigkeit zwischen dem Kraftwagen (4) und dem Hindernis (5) und einer jeweiligen lokalen Bodenbeschaffenheit zu bestimmen, ob ein automatischer Bremseingriff auszuführen ist und ob der automatische Bremseingriff vor, während und/oder nach einem zum Führen des Kraftwagens (4) entlang der Ausweichtrajektorie (16, 17, 18) ausgeführten Lenkeingriffs auszuführen ist.

2. Fahrassistenzsystem (7) nach Anspruch 1,
**dadurch gekennzeichnet, dass**
das Fahrassistenzsystem (7) dazu eingerichtet ist, sofern vorhanden mehrere Hindernisse (5) in der Umgebung zu detektieren, deren Bewegung relativ zu dem Kraftwagen (4) nachzuverfolgen und für solche der Hindernisse (5), für die eine von null verschiedene Kollisionswahrscheinlichkeit bestimmt wurde, eine jeweilige Ausweichtrajektorie (16, 17, 18) auch dann zu bestimmen und kontinuierlich zu aktualisieren, wenn die jeweilige Kollisionswahrscheinlichkeit kleiner als der vorgegebene erste Schwellenwert ist.

3. Fahrassistenzsystem (7) nach einem der vorhergehenden Ansprüche,
**dadurch gekennzeichnet, dass**
das Fahrassistenzsystem (7) dazu eingerichtet ist, automatisch zu bestimmen, ob durch einen Steuereingriff eine zur Kollisionsvermeidung oder für eine Minderung einer Kollisionsauswirkung für den Fahrer (6) ausreichende Verkleinerung einer Querüberdeckung zwischen dem Kraftwagen (4) und dem Hindernis (5) erreichbar ist und wenn dies nicht der Fall ist, Steuereingriffe, insbesondere Lenkeingriffe, welche zu einer nicht-ausreichenden Verkleinerung der Querüberdeckung führen würden, zu unterdrücken.

4. Fahrassistenzsystem (7) nach einem der vorhergehenden Ansprüche,
**dadurch gekennzeichnet, dass**
das Fahrassistenzsystem (7) dazu eingerichtet ist, das Führen des Kraftwagens (4) entlang der Ausweichtrajektorie (16, 17, 18) durch automatisches Einstellen einer Drehmomentverteilung und/oder durch Ansteuern eines aktiven Fahrwerks des Kraftwagens (4) zum Einstellen einer individuellen Radlast zu unterstützen.

5. Fahrassistenzsystem (7) nach einem der vorhergehenden Ansprüche,
**dadurch gekennzeichnet, dass**
das Fahrassistenzsystem (7) dazu eingerichtet ist, bei Erkennen der Kollisionsgefahr eine Warnkaskade auszulösen, wobei die Warnkaskade zeitlich aufeinanderfolgend ein optisches Warnsignal, ein akustisches Warnsignal, ein haptisches Warnsignal und schließlich einen Steuereingriff und/oder das Modifizieren des Steuereingriffs des Fahrers (6) umfasst.

6. Fahrassistenzsystem (7) nach einem der vorhergehenden Ansprüche,
**dadurch gekennzeichnet, dass**
das Fahrassistenzsystem (7) dazu eingerichtet ist, zu überwachen, ob der Fahrer (6) den Steuereingriff vornimmt und wenn dies bei ermittelter Kollisionsgefahr nicht der Fall ist, durch einen automatischen Steuereingriff den Kraftwagen (4) automatisiert entlang der Ausweichtrajektorie (16, 17, 18) zu führen.

7. Fahrassistenzsystem (7) nach Anspruch 6,
**dadurch gekennzeichnet, dass**
das Fahrassistenzsystem (7) eine Fahrerbeobachtungseinrichtung (15) umfasst und dazu eingerichtet ist,
- den automatischen Steuereingriff vorzunehmen, wenn nach dem Ermitteln der Kollisionsgefahr ein Reaktionszeitfenster verstrichen ist, ohne dass der Fahrer (6) selbst den Steuereingriff zur Kollisionsvermeidung begonnen hat, und
- eine zeitliche Länge des Reaktionszeitfensters in Abhängigkeit von durch die Fahrerbeobachtungseinrichtung bereitgestellten Fahrerreaktionsdaten, welche ein Verhalten und/oder einen Fahrstil des Fahrers (6) charakterisieren, automatisch anzupassen.

8. Kraftwagen (4), aufweisend eine Umgebungssensorik zum Erfassen von Umgebungsdaten, welche eine jeweils aktuelle Umgebung des Kraftwagens (4) charakterisieren, und ein damit verbundenes Fahrassistenzsystem (7) nach einem der vorhergehenden Ansprüche.

9. Verfahren zum Betreiben eines Kraftwagens (4) nach Anspruch 8, bei dem
- durch das Fahrassistenzsystem (7) anhand der Umgebungsdaten automatisch wenigstens ein Hindernis (5) detektiert und eine Kollisionsgefahr für eine Kollision des Kraftwagens (4) mit dem Hindernis (5) ermittelt wird, und
- durch das Fahrerassistenzsystem automatisch wenigstens eine Ausweichtrajektorie (16, 17, 18) für den Kraftwagen (4) zur Vermeidung der Kollision bestimmt wird,- als das Hindernis (5) ein dem Kraftwagen (4) entgegenkommendes Fremdfahr- zeug (5), für welches die Kollisionsgefahr größer als ein vorgegebener erster Schwellenwert ist, detektiert wird, und
- überprüft wird, ob ein Steuereingriff des Fahrers (6) des Kraftwagens (4) diesen entlang der bestimmten Ausweichtrajektorie (16, 17, 18) führt, und wenn dies nicht der Fall ist, der Steuereingriff des Fahrers (6) automatisch modifiziert wird, sodass der Kraftwagen (4) durch den modifizierten Steuereingriff entlang der bestimmten Ausweichtrajektorie (16, 17, 18) geführt wird
**dadurch gekennzeichnet, dass**
eine Wahrscheinlichkeit für ein erfolgreiches Ausweichen und eine Fahrstabilität des Kraftwagens (4) während des Ausweichens optimiert werden und dazu in Abhängigkeit von fahrmechanischen Eigenschaften des Kraftwagens (4), einer Verkehrsdichte in der Umgebung, einer Relativgeschwindigkeit zwischen dem Kraftwagen (4) und dem Hindernis (5) und einer jeweiligen lokalen Bodenbeschaffenheit bestimmt wird, ob ein automatischer Bremseingriff auszuführen ist und ob der automatische Bremseingriff vor, während und/oder nach einem zum Führen des Kraftwagens (4) entlang der Ausweichtrajektorie (16, 17, 18) ausgeführten Lenkeingriffs auszuführen ist.

## Claims

1. A driving assistance system (7) for a motor vehicle (4) for preventing collisions, comprising a data processing device (9) having a data interface for receiving driving status data of the motor vehicle (4) and environmental data provided by an environmental sensor system and characterizing a respective current environment of the motor vehicle (4), wherein the driving assistance system (7) is configured,
- based on the environmental data, to detect an obstacle (5) that is external to the vehicle and to determine a corresponding risk of collision as a function of the driving status data,
- to determine an evasion trajectory (16, 17, 18) for preventing a collision of the motor vehicle (4) with the obstacle (5) - to detect another vehicle (5) as the obstacle (5), which vehicle is coming towards the motor vehicle (4) and for which the risk of collision is greater than a predetermined first threshold value, and
- to check whether a control intervention of a driver (6) of the motor vehicle (4) is guiding said motor vehicle along the determined evasion trajectory (16, 17, 18), and if this is not the case to automatically modify the control intervention of the driver (6) such that the motor vehicle (4) is guided along the determined evasion trajectory (16, 17, 18) by means of the modified control intervention,
**characterized in that**
the driving assistance system (7) is configured to optimize the probability of successful evasion and to optimize the driving stability of the motor vehicle (4) during evasion and, to this end, to determine, as a function of properties relating to the driving mechanics of the motor vehicle (4), traffic density in the environment, a relative speed between the motor vehicle (4) and the obstacle (5), and a respective local road conditions, whether an automatic braking intervention is to be carried out and whether the automatic braking intervention is to be carried out before, during and/or after a steering intervention performed in order to guide the motor vehicle (4) along the evasion trajectory (16, 17, 18).

2. The driving assistance system (7) according to claim 1,
**characterized in that**
the driving assistance system (7) is configured to detect, if there are any, a plurality of obstacles (5) in the environment, to track the movement thereof relative to the motor vehicle (4) and to also determine and continuously update a respective evasion trajectory (16, 17, 18) for those of the obstacles (5) for which a collision probability other than zero was determined, even if the respective collision probability is less than the predetermined first threshold value.

3. The driving assistance system (7) according to any one of the preceding claims,
**characterized in that**
the driving assistance system (7) is configured to automatically determine whether a reduction in a transverse overlap between the motor vehicle (4) and the obstacle (5) that is sufficient for preventing a collision or reducing the impact of a collision for the driver (6) can be achieved by a control intervention, and if this is not the case, to suppress control interventions, in particular steering interventions, which would lead to an insufficient reduction in the transverse overlap.

4. The driving assistance system (7) according to any one of the preceding claims,
**characterized in that**
the driving assistance system (7) is configured to support the guiding of the motor vehicle (4) along the evasion trajectory (16, 17, 18) by automatically adjusting a torque distribution and/or by controlling an active chassis of the motor vehicle (4) in order to adjust an individual wheel load.

5. The driving assistance system (7) according to any one of the preceding claims,
**characterized in that**
the driving assistance system (7) is configured to trigger a warning cascade when the risk of collision is detected, wherein the warning cascade comprises, in the following sequence, an optical warning signal, an acoustic warning signal, a haptic warning signal and finally a control intervention and/or the modifying of the control intervention of the driver (6).

6. The driving assistance system (7) according to any one of the preceding claims,
**characterized in that**
the driving assistance system (7) is configured to monitor whether the driver (6) carries out the control intervention and, if this is not the case, when the risk of collision is determined, to automatically guide the motor vehicle (4) along the evasion trajectory (16, 17, 18) by means of an automatic control intervention.

7. The driving assistance system (7) according to claim 6,
**characterized in that**
the driving assistance system (7) comprises a driver monitoring device (15) and is configured to
- perform the automatic control intervention if a reaction time window has elapsed after the risk of collision was determined, without the driver (6) having started the control intervention themselves to prevent a collision, and
- to automatically adjust a length of time of the reaction time window as a function of driver reaction data provided by the driver monitoring device and characterizing a behavior and/or a driving style of the driver (6).

8. A motor vehicle (4), comprising an environmental sensor system for acquiring environmental data that characterize a respective current environment of the motor vehicle (4), and a driving assistance system (7) associated therewith according to any one of the preceding claims.

9. A method for operating a motor vehicle (4) according to claim 8, with which
- at least one obstacle (5) is automatically detected and a risk of collision for a collision of the motor vehicle (4) with the obstacle (5) is determined by the driving assistance system (7) on the basis of the environmental data, and
- at least one evasion trajectory (16, 17, 18) for the motor vehicle (4) is automatically determined by the driving assistance system to prevent the collision - another vehicle (5) as the obstacle (5), which vehicle is coming towards the motor vehicle (4) and for which the risk of collision is greater than a predetermined first threshold value, is detected and
- there is a check of whether a control intervention of the driver (6) of the motor vehicle (4) guides said motor vehicle along the determined evasion trajectory (16, 17, 18), and if this is not the case, the control intervention of the driver (6) is automatically modified such that the motor vehicle (4) is guided along the determined evasion trajectory (16, 17, 18) by means of the modified control intervention
**characterized in that**
a probability of successful evasion and driving stability of the motor vehicle (4) during the evasion are optimized and, to this end, it is determined, as a function of properties relating to the driving mechanics of the motor vehicle (4), traffic density in the surroundings, a relative speed between the motor vehicle (4) and the obstacle (5) and respective local road conditions, whether an automatic braking intervention is to be carried out and whether the automatic braking intervention is to be carried out before, during and/or after a steering intervention performed in order to guide the motor vehicle (4) along the evasion trajectory (16, 17, 18).

## Revendications

1. Système d'aide à la conduite (7) pour un véhicule automobile (4) pour la prévention de collisions, présentant un dispositif de traitement de données (9) comprenant une interface de données pour la réception de données d'état de conduite du véhicule automobile (4) et de données d'environnement fournies par un système de capteurs d'environnement, lesquelles caractérisent un environnement réel respectif du véhicule automobile (4), le système d'aide à la conduite (7) étant conçu
- pour détecter, au moyen des données d'environnement, un obstacle (5) externe au véhicule et pour déterminer, en fonction des données d'état de conduite, un risque de collision correspondant,
- pour déterminer une trajectoire d'évitement (16, 17, 18) pour la prévention d'une collision du véhicule automobile (4) avec l'obstacle (5), - pour détecter, en tant qu'obstacle (5), un véhicule étranger (5) venant en sens inverse vers le véhicule automobile (4), pour lequel le risque de collision est supérieur à une première valeur de seuil prédéfinie, et
- pour contrôler si une intervention de commande d'un conducteur (6) du véhicule automobile (4) guide celui-ci le long de la trajectoire d'évitement (16, 17, 18) déterminée, et lorsque cela n'est pas le cas, pour modifier automatiquement l'intervention de commande du conducteur (6), de telle façon que le véhicule automobile (4) est guidé le long de la trajectoire d'évitement (16, 17, 18) déterminée par l'intervention de commande modifiée,
**caractérisé en ce que**
le système d'aide à la conduite (7) est conçu pour optimiser une probabilité pour un évitement réussi et une stabilité de conduite du véhicule automobile (4) pendant l'évitement et pour déterminer en outre, en fonction de propriétés mécaniques de conduite du véhicule automobile (4), d'une densité de trafic dans l'environnement, d'une vitesse relative entre le véhicule automobile (4) et l'obstacle (5) et d'une nature du sol locale respective, si une intervention de freinage automatique doit être exécutée et si l'intervention de freinage automatique doit être exécutée avant, pendant et/ou après une intervention de direction exécutée pour guider le véhicule automobile (4) le long de la trajectoire d'évitement (16, 17, 18).

2. Système d'aide à la conduite (7) selon la revendication 1,
**caractérisé en ce que**
le système d'aide à la conduite (7) est conçu pour détecter, s'ils sont présents, plusieurs obstacles (5) dans l'environnement, pour suivre leur mouvement par rapport au véhicule automobile (4) et pour déterminer et actualiser continuellement, pour ceux des obstacles (5) pour lesquels une probabilité de collision différente de zéro a été déterminée, une trajectoire d'évitement (16, 17, 18) respective, même lorsque la probabilité de collision respective est inférieure à la première valeur de seuil prédéfinie.

3. Système d'aide à la conduite (7) selon l'une quelconque des revendications précédentes,
**caractérisé en ce que**
le système d'aide à la conduite (7) est conçu pour déterminer automatiquement si, par une intervention de commande, une réduction d'un recouvrement transversal entre le véhicule automobile (4) et l'obstacle (5) suffisante pour une prévention de collision ou pour une réduction d'un effet de collision pour le conducteur (6) peut être obtenue et, si cela n'est pas le cas, pour réprimer des interventions de commande, en particulier des interventions de direction, qui mèneraient à une réduction insuffisante du recouvrement transversal.

4. Système d'aide à la conduite (7) selon l'une quelconque des revendications précédentes,
**caractérisé en ce que**
le système d'aide à la conduite (7) est conçu pour appuyer le guidage du véhicule automobile (4) le long de la trajectoire d'évitement (16, 17, 18) par le réglage automatique d'une distribution de couple et/ou par la commande d'un train de roulement actif du véhicule automobile (4) pour le réglage d'une charge de roue individuelle.

5. Système d'aide à la conduite (7) selon l'une quelconque des revendications précédentes,
**caractérisé en ce que**
le système d'aide à la conduite (7) est conçu pour déclencher, lors de la détection du risque de collision, une cascade d'avertissement, la cascade d'avertissement comprend, en succession temporelle, un signal d'avertissement optique, un signal d'avertissement acoustique, un signal d'avertissement haptique et finalement une intervention de commande et/ou la modification de l'intervention de commande du conducteur (6).

6. Système d'aide à la conduite (7) selon l'une quelconque des revendications précédentes,
**caractérisé en ce que**
le système d'aide à la conduite (7) est conçu pour surveiller si le conducteur (6) effectue l'intervention de commande et, lorsque cela n'est pas le cas pour un risque de collision déterminé, pour guider le véhicule automobile (4) le long de la trajectoire d'évitement (16, 17, 18) par une intervention de commande automatique.

7. Système d'aide à la conduite (7) selon la revendication 6,
**caractérisé en ce que**
le système d'aide à la conduite (7) comprend un dispositif d'observation du conducteur (15) et est conçu
- pour effectuer l'intervention de commande automatique si, après la détermination du risque de collision, une fenêtre de temps de réaction s'est écoulée sans que le conducteur (6) même n'ait commencé l'intervention de commande pour la prévention de collision, et
- pour adapter automatiquement une longueur temporelle de la fenêtre de temps de réaction en fonction des données de réaction du conducteur fournies par le dispositif d'observation du conducteur, lesquelles caractérisent un comportement et/ou un style de conduite du conducteur (6).

8. Véhicule automobile (4) présentant un système de capteurs d'environnement pour la détection de données d'environnement, lesquelles caractérisent un environnement réel respectif du véhicule automobile (4), et un système d'aide à la conduite (7) selon l'une quelconque des revendications connecté à celui-ci.

9. Procédé de fonctionnement d'un véhicule automobile (4) selon la revendication 8, dans lequel
- au moins un obstacle (5) est détecté automatiquement au moyen des données d'environnement par le système d'aide à la conduite (7) et un risque de collision pour une collision du véhicule automobile (4) avec l'obstacle (5) est déterminée, et
- au moins une trajectoire d'évitement (16, 17, 18) pour le véhicule automobile (4) pour la prévention de la collision est déterminée automatiquement par le système d'aide à la conduite, - un véhicule étranger (5) venant dans le sens inverse vers le véhicule automobile (4), pour lequel le risque de collision est supérieur à une première valeur de seuil, est détecté en tant qu'obstacle (5), et
- il est contrôlé si une intervention de commande du conducteur (6) du véhicule automobile (4) guide celui-ci le long de la trajectoire d'évitement (16, 17, 18) déterminée et, lorsque cela n'est pas le cas, l'intervention de commande du conducteur (6) est modifiée automatiquement, de telle façon que le véhicule automobile (4) est guidé le long de la trajectoire d'évitement (16 17, 18) déterminée par l'intervention de commande modifiée
**caractérisé en ce que**
une probabilité pour un évitement réussi et une stabilité de conduite du véhicule automobile (4) sont optimisées pendant l'évitement et il est en outre déterminé, en fonction de propriétés mécaniques de conduite du véhicule automobile (4), d'une densité de trafic dans l'environnement, d'une vitesse relative entre le véhicule automobile (4) et l'obstacle (5) et d'une nature du sol locale respective, si une intervention de freinage automatique doit être exécutée et si l'intervention de freinage automatique doit être exécutée avant, pendant et/ou après une intervention de direction exécutée pour guider le véhicule automobile (4) le long de la trajectoire d'évitement (16, 17, 18).
